# EUROPEAN PATENT APPLICATION

(11) **EP 4 783 028 A1**
(43) Date of publication of application: **29.07.2026**
(21) Application number: 24876568.7
(22) Date of filing: 10.10.2024
(51) Int. Cl.: G06F 16/36

(54) **CENTRAL ARCHITECTURE DIAGRAM CONSTRUCTION METHOD AND ARCHITECTURE DIAGRAM CONSTRUCTION SYSTEM**

(30) Priority: 12.10.2023 CN 202311329839
(71) Applicant: HUAWEI TECHNOLOGIES CO., LTD., Shenzhen 518129 (CN)
(72) Inventor: GUO, Fangfang, Shenzhen, Guangdong 518129 (CN); FU, Wei, Shenzhen, Guangdong 518129 (CN); LI, Min, Shenzhen, Guangdong 518129 (CN); DING, Xuxu, Shenzhen, Guangdong 518129 (CN); ZHANG, Wanqin, Shenzhen, Guangdong 518129 (CN)
(74) Representative: Maiwald GmbH
(86) International application number: PCT/CN2024/123815
(87) International publication number: WO 2025/077756

(57) **Abstract**

This application provides a central architecture diagram construction method and an architecture diagram construction system. The method may be applied to an architecture diagram construction system, so as to generate a central architecture diagram with a good visualization effect. Specifically, the architecture diagram construction system obtains a plurality of pieces of entity information and a relationship between the plurality of pieces of entity information, and then determines first entity information, where the first entity information is one of the plurality of pieces of entity information. Then, the architecture diagram construction system constructs a central architecture diagram based on the first entity information and the relationship between the plurality of pieces of entity information, and displays the central architecture diagram, where a central node in the central architecture diagram indicates the first entity information, the central architecture diagram further includes a plurality of ring layers centered on the central node, each ring layer includes at least one node, and nodes at different ring layers have different relationships with the central node.

## Description

This application claims priority to Chinese Patent Application No. 202311329839.5, filed with the China National Intellectual Property Administration on October 12, 2023, and entitled "CENTRAL ARCHITECTURE DIAGRAM CONSTRUCTION METHOD AND ARCHITECTURE DIAGRAM CONSTRUCTION SYSTEM", which is incorporated herein by reference in its entirety.

### TECHNICAL FIELD

This application relates to the field of computer technologies, and in particular, to a central architecture diagram construction method and an architecture diagram construction system.

### BACKGROUND

An architecture diagram can show a user a relationship between entity information (for example, enterprise processes). However, more entity information indicates a more complex relationship between entity information, and more nodes and edges in the architecture diagram. This easily leads to edge stacking and crossing in the architecture diagram, causing more visual interference to user during observation.

### SUMMARY

This application provides a central architecture diagram construction method and an architecture diagram construction system, so as to construct a central architecture diagram with a good visualization effect.

According to a first aspect, this application provides a central architecture diagram construction method. The method may be applied to an architecture diagram construction system. Specifically, the architecture diagram construction system obtains a plurality of pieces of entity information and a relationship between the plurality of pieces of entity information, and then determines first entity information, where the first entity information is one of the plurality of pieces of entity information. Then, the architecture diagram construction system constructs a central architecture diagram based on the first entity information and the relationship between the plurality of pieces of entity information, and displays the central architecture diagram, where a central node in the central architecture diagram indicates the first entity information, the central architecture diagram further includes a plurality of ring layers centered on the central node, each ring layer includes at least one node, and nodes at different ring layers have different relationships with the central node.

The central architecture diagram constructed by using the technical solutions provided in this application provides a user with another perspective on observing entity information, that is, a node corresponding to entity information that the user wants to observe is used as the central node, and nodes corresponding to other entity information are arranged into a plurality of ring layers by using the central node as a center, so that the user can more easily observe a relationship between entity information indicated by the central node and other entity information.

In a possible implementation of the first aspect, after obtaining the plurality of pieces of entity information and the relationship between the plurality of pieces of entity information, the architecture diagram construction system further constructs and displays a global architecture diagram based on the plurality of pieces of entity information and the relationship between the plurality of pieces of entity information, where each node in the global architecture diagram indicates one piece of entity information in the plurality of pieces of entity information. That the architecture diagram construction system determines the first entity information includes: The architecture diagram construction system receives information generated when a user clicks a first node in the global architecture diagram, and then determines, based on the information, the first entity information corresponding to the first node. In the foregoing implementation, the architecture diagram construction system may construct the central architecture diagram based on a user requirement, so that the user can focus on entity information that needs to be observed.

In a possible implementation of the first aspect, that the architecture diagram construction system constructs the central architecture diagram based on the first entity information and the relationship between the plurality of pieces of entity information includes: The architecture diagram construction system determines levels of the plurality of pieces of entity information based on a hierarchical relationship between nodes in the global architecture diagram, and determines an arrangement of the nodes at the plurality of ring layers based on the levels of the plurality of pieces of entity information, where nodes at a same ring layer indicate entity information at a same level, and nodes at different ring layers indicate entity information at different levels. Then, the architecture diagram construction system constructs the central architecture diagram based on the arrangement of the nodes at the plurality of ring layers.

In the foregoing implementation, the user can observe a relationship between the first entity information and entity information at different levels from a perspective of a level of entity information. In addition, the user can further expand (or collapse) a node based on a level of entity information, to observe lower-layer (or upper-layer) entity information of entity information indicated by the expanded (or collapsed) node.

In a possible implementation of the first aspect, the central architecture diagram is an enterprise process architecture diagram, and the enterprise process architecture diagram represents a relationship between enterprise processes.

In a possible implementation of the first aspect, the architecture diagram construction system further receives an operation that is entered by the user to expand any node at a first ring layer in the central architecture diagram, where the node indicates second entity information in the plurality of pieces of entity information, and the second entity information is associated with one or more pieces of lower-layer entity information. Then, the architecture diagram construction system updates the central architecture diagram based on the operation of expanding the any node, and displays an updated central architecture diagram, where the updated central architecture diagram hides the node, the updated central architecture diagram includes a second ring layer, the second ring layer includes one or more child nodes associated with the node, and the child node associated with the node indicates lower-layer entity information of the second entity information.

In the foregoing implementation, the user may expand any node at a ring layer in the central architecture diagram based on a requirement, to observe lower-layer entity information associated with entity information indicated by the expanded node.

In a possible implementation of the first aspect, that the architecture diagram construction system receives the operation that is entered by the user to expand the any node at the first ring layer in the central architecture diagram includes: The architecture diagram construction system receives an operation that the user selects the node and moves the node to an area in which the second ring layer in the central architecture diagram is located.

In a possible implementation of the first aspect, the architecture diagram construction system further receives an operation that is entered by the user to replace the central node, updates the central architecture diagram based on the operation of replacing the central node, and displays an updated central architecture diagram, where the updated central architecture diagram includes a new central node and nodes at a plurality of ring layers centered on the new central node. In this way, the user may observe any node as the central node based on a requirement.

In a possible implementation of the first aspect, that the architecture diagram construction system receives the operation that is entered by the user to replace the central node includes: The architecture diagram construction system receives an operation that the user selects any node at a third ring layer in the central architecture diagram and moves the any node to an area in which the original central node is located; or the architecture diagram construction system receives an operation that the user selects a replaceable node and moves the replaceable node to an area in which the original central node is located, where the replaceable node is a node displayed in the central architecture diagram when the architecture diagram construction system detects the operation performed on the original central node.

In a possible implementation of the first aspect, the architecture diagram construction system further receives an operation that is entered by the user to collapse a second node at a fourth ring layer in the central architecture diagram, where the second node indicates third entity information in the plurality of pieces of entity information. Then, the architecture diagram construction system updates the central architecture diagram based on the operation of collapsing the second node, and displays an updated central architecture diagram, where the updated central architecture diagram hides the second node and/or a third node at the fourth ring layer, the third node indicates fourth entity information in the plurality of pieces of entity information, the updated central architecture diagram further includes a fifth ring layer, the fifth ring layer includes a fourth node, and lower-layer entity information associated with entity information indicated by the fourth node includes the third entity information and the fourth entity information.

In the foregoing implementation, the user may collapse any one or more nodes at a ring layer in the central architecture diagram based on a requirement, to observe upper-layer entity information associated with entity information indicated by the collapsed node.

In a possible implementation of the first aspect, that the architecture diagram construction system receives the operation that is entered by the user to collapse the second node at the fourth ring layer in the central architecture diagram includes: The architecture diagram construction system receives an operation that the user selects the second node and moves the second node to an area in which the fifth ring layer is located.

In a possible implementation of the first aspect, the central architecture diagram further includes an edge between the central node and a node at a ring layer, and the edge indicates a relationship between entity information indicated by nodes at two ends of the edge. It should be understood that, when the central architecture diagram does not include an edge between nodes at a ring layer, the user may more intuitively observe a relationship between the first entity information and other entity information.

In a possible implementation of the first aspect, the central architecture diagram includes a level of entity information indicated by any node, so that the user can observe the level of the entity information. Alternatively, a node at a ring layer connected to the central node in the central architecture diagram and a node at another ring layer are represented by different diagram elements, so that the node at the ring layer connected to the central node is highlighted, and the user can observe entity information related to the first entity information.

According to a second aspect, this application provides a central architecture diagram display method. The method may be applied to an architecture diagram display system. Specifically, the architecture diagram display system displays a central architecture diagram, where a central node in the central architecture diagram indicates first entity information, the central architecture diagram further includes a plurality of ring layers centered on the central node, and each ring layer includes at least one node. The architecture diagram display system further receives an operation that a user moves a first node at a first ring layer in the central architecture diagram to an area in which a second ring layer is located, where the first node indicates second entity information. Then, the architecture diagram display system hides the first node based on the operation performed by the user on the first node, and displays, at the second ring layer, a second node associated with the first node, where the second node indicates third entity information, and the third entity information is associated with the second entity information.

In a possible implementation of the second aspect, the second node is a child node of the first node, and the third entity information is lower-layer entity information of the second entity information; or the second node is a parent node of the first node, and the third entity information is upper-layer entity information of the second entity information.

In a possible implementation of the second aspect, the architecture diagram display system further receives an operation that the user selects a third node at a third ring layer in the central architecture diagram and moves the third node to an area in which the central node is located, where the third node indicates fourth entity information. Then, the architecture diagram display system displays, based on the operation performed by the user on the third node, a new central node and nodes at a plurality of ring layers centered on the new central node, where the new central node is the third node.

In a possible implementation of the second aspect, the architecture diagram display system further receives an operation performed by the user on the central node, and displays a replaceable node based on the operation, where the replaceable node indicates fifth entity information. Then, the architecture diagram display system receives an operation that the user selects the replaceable node and moves the replaceable node to an area in which the central node is located, and displays, based on the operation performed by the user on the replaceable node, a new central node and nodes at a plurality of ring layers centered on the new central node, where the new central node is the replaceable node.

In a possible implementation of the second aspect, the central architecture diagram is an enterprise process architecture diagram, and the enterprise process architecture diagram represents a relationship between enterprise processes.

In a possible implementation of the second aspect, before displaying the central architecture diagram, the architecture diagram display system further obtains a global architecture diagram, where the global architecture diagram includes a plurality of nodes, and each node indicates one piece of entity information, and then determines, based on a hierarchical relationship between nodes in the global architecture diagram, levels of the plurality of pieces of entity information indicated by the plurality of nodes. Then, the architecture diagram display system determines an arrangement of the nodes at the plurality of ring layers based on the levels of the plurality of pieces of entity information, where nodes at a same ring layer indicate entity information at a same level, and nodes at different ring layers indicate entity information at different levels. Then, the architecture diagram display system constructs the central architecture diagram based on the arrangement of the nodes at the plurality of ring layers.

According to a third aspect, this application provides an architecture diagram construction system. The system includes an obtaining module, a layout module, and a visualization module. The obtaining module is configured to obtain a plurality of pieces of entity information and a relationship between the plurality of pieces of entity information. The layout module is configured to: determine first entity information, and construct a central architecture diagram based on the first entity information and the relationship between the plurality of pieces of entity information, where the first entity information is one of the plurality of pieces of entity information. The visualization module is configured to display the central architecture diagram, where a central node in the central architecture diagram indicates the first entity information, the central architecture diagram further includes a plurality of ring layers centered on the central node, each ring layer includes at least one node, and nodes at different ring layers have different relationships with the central node.

In a possible implementation of the third aspect, the layout module is further configured to construct a global architecture diagram based on the plurality of pieces of entity information and the relationship between the plurality of pieces of entity information, where each node in the global architecture diagram indicates one piece of entity information in the plurality of pieces of entity information. The visualization module is further configured to display the global architecture diagram. The layout module is configured to: receive information generated when a user clicks a first node in the global architecture diagram, and determine, based on the information, the first entity information corresponding to the first node.

In a possible implementation of the third aspect, the layout module is configured to: determine levels of the plurality of pieces of entity information based on a hierarchical relationship between nodes in the global architecture diagram; determine an arrangement of the nodes at the plurality of ring layers based on the levels of the plurality of pieces of entity information, where nodes at a same ring layer indicate entity information at a same level, and nodes at different ring layers indicate entity information at different levels; and construct the central architecture diagram based on the arrangement of the nodes at the plurality of ring layers.

In a possible implementation of the third aspect, the central architecture diagram is an enterprise process architecture diagram, and the enterprise process architecture diagram represents a relationship between enterprise processes.

In a possible implementation of the third aspect, the architecture diagram construction system further includes an interaction module. The interaction module is configured to receive an operation that is entered by the user to expand any node at a first ring layer in the central architecture diagram, where the node indicates second entity information in the plurality of pieces of entity information, and the second entity information is associated with one or more pieces of lower-layer entity information. The layout module is further configured to update the central architecture diagram based on the operation of expanding the any node. The visualization module is further configured to display an updated central architecture diagram, where the updated central architecture diagram hides the node, the updated central architecture diagram includes a second ring layer, the second ring layer includes one or more child nodes associated with the node, and the child node associated with the node indicates lower-layer entity information of the second entity information.

In a possible implementation of the third aspect, the interaction module is configured to receive an operation that the user selects the any node in the first ring layer and moves the any node to an area in which the second ring layer in the central architecture diagram is located.

In a possible implementation of the third aspect, the interaction module is further configured to receive an operation that is entered by the user to replace the central node. The layout module is further configured to update the central architecture diagram based on the operation of replacing the central node. The visualization module is further configured to display an updated central architecture diagram, where the updated central architecture diagram includes a new central node and nodes at a plurality of ring layers centered on the new central node.

In a possible implementation of the third aspect, the interaction module is configured to: receive an operation that the user selects any node at a third ring layer in the central architecture diagram and moves the any node to an area in which the original central node is located; or receive an operation that the user selects a replaceable node and moves the replaceable node to an area in which the original central node is located, where the replaceable node is a node displayed in the central architecture diagram when the operation performed on the original central node is detected.

In a possible implementation of the third aspect, the interaction module is further configured to receive an operation that is entered by the user to collapse a second node at a fourth ring layer in the central architecture diagram, where the second node indicates third entity information in the plurality of pieces of entity information. The layout module is further configured to update the central architecture diagram based on the operation of collapsing the second node. The visualization module is further configured to display an updated central architecture diagram, where the updated central architecture diagram hides the second node and/or a third node at the fourth ring layer, the third node indicates fourth entity information in the plurality of pieces of entity information, the updated central architecture diagram further includes a fifth ring layer, the fifth ring layer includes a fourth node, and lower-layer entity information associated with entity information indicated by the fourth node includes the third entity information and the fourth entity information.

In a possible implementation of the third aspect, the interaction module is configured to receive an operation that the user selects the second node and moves the second node to an area in which the fifth ring layer is located.

In a possible implementation of the third aspect, the central architecture diagram further includes an edge between the central node and a node at a ring layer, and the edge indicates a relationship between entity information indicated by nodes at two ends of the edge.

In a possible implementation of the third aspect, the central architecture diagram includes a level of entity information indicated by any node; or a node at a ring layer connected to the central node in the central architecture diagram and a node at another ring layer are represented by different diagram elements.

According to a fourth aspect, this application provides an architecture diagram display system. The system includes a visualization module and an interaction module. The visualization module is configured to display a central architecture diagram, where a central node in the central architecture diagram indicates first entity information, the central architecture diagram further includes a plurality of ring layers centered on the central node, and each ring layer includes at least one node. The interaction module is configured to receive an operation that a user moves a first node at a first ring layer in the central architecture diagram to an area in which a second ring layer is located, where the first node indicates second entity information. The visualization module is further configured to: hide the first node based on the operation performed by the user on the first node, and display, at the second ring layer, a second node associated with the first node, where the second node indicates third entity information, and the third entity information is associated with the second entity information.

In a possible implementation of the fourth aspect, the second node is a child node of the first node, and the third entity information is lower-layer entity information of the second entity information; or the second node is a parent node of the first node, and the third entity information is upper-layer entity information of the second entity information.

In a possible implementation of the fourth aspect, the interaction module is further configured to receive an operation that the user selects a third node at a third ring layer in the central architecture diagram and moves the third node to an area in which the central node is located, where the third node indicates fourth entity information. The visualization module is further configured to display, based on the operation performed by the user on the third node, a new central node and nodes at a plurality of ring layers centered on the new central node, where the new central node is the third node.

In a possible implementation of the fourth aspect, the interaction module is further configured to receive an operation performed by the user on the central node. The visualization module is further configured to display a replaceable node based on the operation, where the replaceable node indicates fifth entity information. The interaction module is further configured to receive an operation that the user selects the replaceable node and moves the replaceable node to an area in which the central node is located. The visualization module is further configured to display, based on the operation performed by the user on the replaceable node, a new central node and nodes at a plurality of ring layers centered on the new central node, where the new central node is the replaceable node.

In a possible implementation of the fourth aspect, the central architecture diagram is an enterprise process architecture diagram, and the enterprise process architecture diagram represents a relationship between enterprise processes.

In a possible implementation of the fourth aspect, the architecture diagram display system further includes a layout module. The layout module is configured to obtain a global architecture diagram, where the global architecture diagram includes a plurality of nodes, and each node indicates one piece of entity information. The layout module is configured to: determine, based on a hierarchical relationship between nodes in the global architecture diagram, levels of the plurality of pieces of entity information indicated by the plurality of nodes; and determine an arrangement of the nodes at the plurality of ring layers based on the levels of the plurality of pieces of entity information, where nodes at a same ring layer indicate entity information at a same level, and nodes at different ring layers indicate entity information at different levels. The layout module is further configured to construct the central architecture diagram based on the arrangement of the nodes at the plurality of ring layers.

According to a fifth aspect, this application provides a compute device. The compute device includes a processor and a memory. The processor is configured to execute instructions stored in the memory, to implement some or all of the methods described in any one of the first aspect and the implementations of the first aspect, and any one of the second aspect and the implementations of the second aspect.

According to a sixth aspect, this application provides a compute device cluster. The compute device cluster includes at least one compute device, and each compute device includes a processor and a memory. The processor of the at least one compute device is configured to execute instructions stored in the memory of the at least one compute device, so that the compute device cluster performs some or all of the methods described in any one of the first aspect and the implementations of the first aspect, and any one of the second aspect and the implementations of the second aspect.

According to a seventh aspect, this application provides a computer program product. The computer program product may be software or a program product that includes instructions and that can run on a compute device or can be stored in any usable medium. When the computer program product runs on a compute device or a compute device cluster, the compute device or the compute device cluster is enabled to perform some or all of the methods described in any one of the first aspect and the implementations of the first aspect, and any one of the second aspect and the implementations of the second aspect.

According to an eighth aspect, this application provides a computer-readable storage medium. The computer storage medium includes computer program instructions, and when the computer program instructions are executed by a compute device or a compute device cluster, the compute device or the compute device cluster is enabled to perform some or all of the methods described in any one of the first aspect and the implementations of the first aspect, and any one of the second aspect and the implementations of the second aspect.

### BRIEF DESCRIPTION OF DRAWINGS

FIG. 1 is a diagram of a structure of an architecture diagram construction system according to an embodiment of this application;
FIG. 2 is a diagram of an application scenario according to an embodiment of this application;
FIG. 3A to FIG. 3I(1) and FIG. 3I(2) are diagrams of user interfaces according to an embodiment of this application;
FIG. 4 is a diagram of an architecture diagram construction method according to an embodiment of this application;
FIG. 5 is a diagram of a structure of an architecture diagram display system according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of another compute device cluster according to an embodiment of this application.

### DESCRIPTION OF EMBODIMENTS

The following describes technical solutions provided in this application with reference to accompanying drawings.

An architecture diagram is a topology structure including a plurality of nodes and at least one edge. Each node in the architecture diagram may indicate one piece of entity information, and the edge in the architecture diagram may indicate a relationship between entity information indicated by nodes at two ends of the edge. Therefore, the architecture diagram can show a user a relationship between entity information. However, there is a problem of information tile in the conventional architecture diagram. To be specific, the architecture diagram shows the user all relationships between entity information. Therefore, more entity information indicates a more complex relationship between entity information, and more nodes and edges in the architecture diagram. Consequently, an overall visualization effect of the architecture diagram is poor. Especially in a scenario in which the user wants to focus on a single node in the architecture diagram, many irrelevant nodes and edges in the architecture diagram cause much visual interference to observation of the user.

For example, during management and operation of an enterprise, the architecture diagram (which may also be referred to as an "enterprise process architecture diagram" herein) may show the user enterprise processes and a relationship between the enterprise processes, so that the user can understand, manage, and maintain the enterprise processes. The enterprise process is a set of standard business operation rules and mechanisms in the enterprise. In the enterprise process architecture diagram, each node indicates one process architecture, and each edge indicates an integration relationship between process architectures at two ends of the edge. The process architecture is a structured overall framework for enterprise processes, describing classification, levels, and boundaries and scope of the enterprise processes, and an input/output relationship between the enterprise processes, and reflecting an operation model and business characteristics of the enterprise. In addition, a large process architecture may be further divided to form a plurality of lower-layer process architectures, that is, one process architecture may be associated with a plurality of lower-layer process architectures. Therefore, for the enterprise, there are many low-level process architectures, and a relationship between the low-level process architectures is complex. Correspondingly, the enterprise process architecture diagram includes many nodes and edges. In this case, when the user wants to focus on a single enterprise process, the architecture diagram further shows many irrelevant enterprise processes and a relationship between the enterprise processes, which causes much visual interference to observation of the user.

For the foregoing problem, an embodiment of this application provides an architecture diagram construction system. An architecture diagram constructed by the system can show a user entity information and a relationship between the entity information in a form of a "star orbit". To be specific, in the architecture diagram, a node corresponding to entity information that the user focuses on is located at the center of the diagram, and nodes corresponding to other entity information are arranged around the node located at the center, so that the user can use single piece of entity information as an observation center to understand a relationship between the entity information and other entity information. To be different from the conventional architecture diagram, the foregoing architecture diagram constructed by the architecture diagram construction system is referred to as a central architecture diagram below.

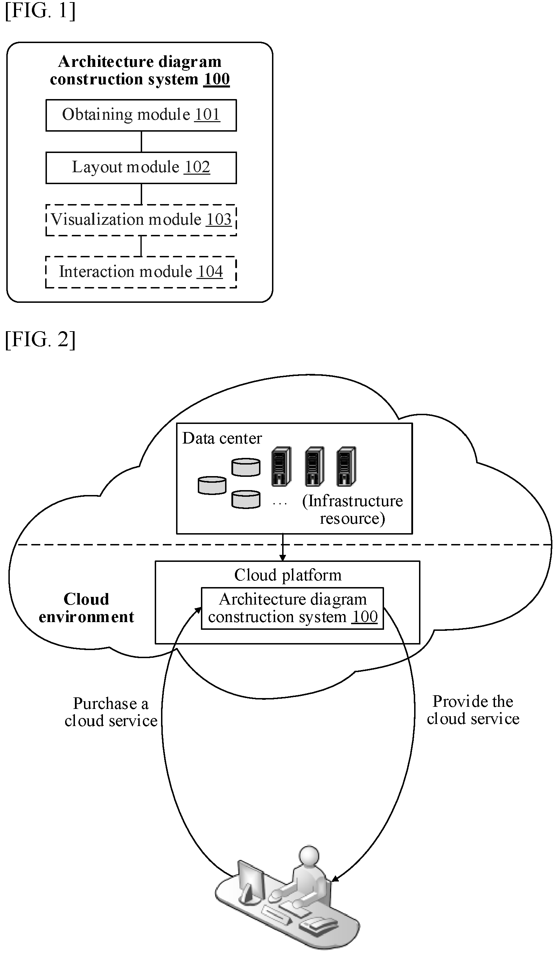

FIG. 1 is a diagram of a structure of an architecture diagram construction system according to an embodiment of this application. It should be understood that FIG. 1 merely shows an example of a division manner of the structure of the architecture diagram construction system. In actual application, the structure of the architecture diagram construction system may alternatively be divided in another manner. This is not specifically limited in embodiments of this application. As shown in FIG. 1, the architecture diagram construction system 100 includes an obtaining module 101, a layout module 102, and a visualization module 103. Optionally, the architecture diagram construction system 100 may further include an interaction module 104.

The obtaining module 101 is configured to obtain a plurality of pieces of entity information and a relationship between the plurality of pieces of entity information. Specifically, the obtaining module 101 may obtain the plurality of pieces of entity information and the relationship between the plurality of pieces of entity information from a database, or may obtain the plurality of pieces of entity information and the relationship between the plurality of pieces of entity information based on an operation entered by a user (for example, an administrator user). The entity information may be related information of an entity with level information, for example, related information of a process architecture (for example, a code and a name of the process architecture), related information of an organizational unit (for example, a name of a department), and related information of a directory (for example, a code and a name of the directory). The relationship between the entity information may include an integration relationship between the entity information. The obtaining module 101 is further configured to send the obtained plurality of pieces of entity information and the obtained relationship between the plurality of pieces of entity information to the layout module 102.

The layout module 102 is configured to determine first entity information, where the first entity information is one of the plurality of pieces of entity information. The layout module 102 is further configured to construct a central architecture diagram based on the first entity information and the relationship between the plurality of pieces of entity information, where the central architecture diagram includes a central node, the central node indicates the first entity information, the central architecture diagram further includes a plurality of ring layers centered on the central node, each ring layer includes at least one node, and nodes at different ring layers have different relationships with the central node. The layout module 102 is further configured to send the constructed central architecture diagram to the visualization module 103.

Optionally, the layout module 102 is further configured to: construct a global architecture diagram based on the plurality of pieces of entity information and the relationship between the plurality of pieces of entity information, and send the constructed global architecture diagram to the visualization module 103, where each node in the global architecture diagram indicates one piece of entity information in the plurality of pieces of entity information. Therefore, the layout module 102 may determine the first entity information in the following manner: The layout module 102 receives information generated when the user clicks a first node in the global architecture diagram, and determines, based on the information, the first entity information corresponding to the first node.

Optionally, in the central architecture diagram, nodes at a same ring layer indicate entity information at a same level, and nodes at different ring layers indicate entity information at different levels.

Optionally, the central architecture diagram further includes an edge between the central node and a node at a ring layer, and the edge indicates a relationship between entity information indicated by nodes at two ends of the edge.

The visualization module 103 is configured to display the central architecture diagram constructed by the layout module 102. It should be understood that, it can be learned from the foregoing functions of the layout module 102 that the central architecture diagram constructed by the module highlights the central node, so that the user can focus on the entity information indicated by the central node.

Optionally, the visualization module 103 is further configured to display the global architecture diagram constructed by the layout module 102, so that the user can view the global architecture diagram, and click the first node in the global architecture diagram. Correspondingly, the layout module 102 may receive the information generated when the user clicks the first node.

Optionally, the visualization module 103 is further configured to optimize the central architecture diagram constructed by the layout module 102, so as to improve a visual effect of the central architecture diagram. For example, a level of entity information indicated by one or more nodes is displayed. For another example, a node at a ring layer connected to the central node and a node at another ring layer are represented by different diagram elements.

In some embodiments, the architecture diagram construction system 100 may further include an interaction module 104.

The interaction module 104 is configured to: receive an operation entered by the user for the central architecture diagram, and send the operation performed by the user on the central architecture diagram to the layout module 102. Correspondingly, the layout module 102 is further configured to: update the central architecture diagram based on the operation performed by the user on the central architecture diagram, and send an updated central architecture diagram to the visualization module 103. The visualization module 103 is further configured to display the updated central architecture diagram.

Optionally, the current central architecture diagram includes a node a, the node a is any node at a ring layer a, and the node a indicates second entity information in the plurality of pieces of entity information. In this case, the interaction module 104 may receive an operation that is entered by the user to expand the node a, and then send the operation of expanding the node a to the layout module 102. The layout module 102 updates the central architecture diagram based on the operation of expanding the node a, and then sends an updated central architecture diagram to the visualization module 103. The visualization module 103 displays the updated central architecture diagram. Compared with the original central architecture diagram, the updated central architecture diagram hides the node a, and displays a child node associated with the node a at a ring layer b, where the child node associated with the node a indicates lower-layer entity information associated with the second entity information. When the node a in the original central architecture diagram is connected to the central node by using an edge, the updated central architecture diagram further hides an edge between the node a and the central node, and displays an edge between the child node associated with the node a and the central node.

Optionally, the current central architecture diagram includes a node d, the node d is any node at a ring layer c, and the node d indicates third entity information in the plurality of pieces of entity information. In this case, the interaction module 104 may further receive an operation that is entered by the user to collapse the node d, and then send the operation of collapsing the node d to the layout module 102. The layout module 102 updates the central architecture diagram based on the operation of collapsing the node d, and then sends an updated central architecture diagram to the visualization module 103. The visualization module 103 displays the updated central architecture diagram. Compared with the original central architecture diagram, the updated central architecture diagram hides the node d and/or a node s at the ring layer c, and displays a parent node associated with the node d at a ring layer d, where the parent node associated with the node d and a parent node of the node s are a same node, the node s indicates fourth entity information in the plurality of pieces of entity information, and lower-layer entity information associated with entity information indicated by the parent node associated with the node d includes the third entity information and the fourth entity information.

Optionally, the interaction module 104 may further receive an operation that is entered by the user to replace the central node, and then send the operation of replacing the central node to the layout module 102. The layout module 102 updates the central architecture diagram based on the operation of replacing the central node, and then sends an updated central architecture diagram to the visualization module 103. The visualization module 103 displays the updated central architecture diagram. Compared with the original central architecture diagram, the updated central architecture diagram displays a new central node and nodes at a plurality of ring layers centered on the new central node.

Therefore, it can be learned that the architecture diagram construction system 100 provided in this embodiment of this application can support the user in expanding or collapsing any node at the ring layer in the central architecture diagram, that is, the user can flexibly define, based on a requirement, a degree of detail of entity information displayed in the central architecture diagram. In addition, the architecture diagram construction system 100 provided in this embodiment of this application further supports using any node as the central node, that is, the user can focus on any entity information based on a requirement.

Optionally, the interaction module 104 is further configured to: receive the information generated when the user clicks the first node in the global architecture diagram, and send the information to the layout module 102, so that the layout module 102 can determine the first entity information based on the information.

In this embodiment of this application, the architecture diagram construction system 100 may be a software system, or may be a hardware device, or may be a combination of a software system and a hardware device.

When the architecture diagram construction system 100 is the software system, the architecture diagram construction system 100 may be deployed in a data center in a cloud environment. For example, the architecture diagram construction system 100 is a cloud service provided by a cloud service provider. In specific implementation, the architecture diagram construction system 100 may be independently deployed on one computing instance in the data center in the cloud environment, or may be distributedly deployed on a plurality of computing instances in the data center in the cloud environment, where the computing instance includes a server, a virtual machine, a container, and the like. As shown in FIG. 2, the architecture diagram construction system 100 is deployed in the data center in the cloud environment, and is abstracted as a cloud service by the cloud service provider. The administrator user may log in to a cloud platform through a client web page, and select and purchase, on the cloud platform, a cloud service corresponding to the architecture diagram construction system 100. After the purchase is successful, the administrator user may provide the architecture diagram construction system 100 with the plurality of pieces of entity information and the relationship between the plurality of pieces of entity information by using the cloud platform. When a common user wants to view an architecture diagram, the common user logs in to the cloud platform through a local client web page, and operates the architecture diagram construction system 100 to generate the central architecture diagram, optimize the central architecture diagram, and display an optimized central architecture diagram. Further, the common user may further expand or collapse any node at a ring line in the central architecture diagram, to view lower-layer or upper-layer entity information associated with entity information indicated by the expanded or collapsed node. Alternatively, the common user may replace the central node in the central architecture diagram to use another node as an observation center for exploration.

The architecture diagram construction system 100 may alternatively be deployed on a terminal compute device. For example, the architecture diagram construction system 100 is a source code or a component that may run on one or more terminal compute devices. The terminal compute device includes a terminal server, a desktop computer, a smartphone, a notebook computer, a tablet computer, and the like. In a possible deployment manner, in the architecture diagram construction system 100, the obtaining module 101 and the layout module 102 are deployed on a back-end server, and the visualization module 103 and the interaction module 104 are deployed on a front-end server. For the user, when the user wants to view an architecture diagram, the back-end server constructs the central architecture diagram based on the obtained plurality of pieces of entity information and the obtained relationship between the plurality of pieces of entity information, and returns the constructed central architecture diagram to the front-end server. Then, the front-end server optimizes the central architecture diagram, and displays an optimized central architecture diagram to the user. In addition, the user may further expand or collapse any node at a ring layer in the central architecture diagram through the front-end server, or replace the central node in the central architecture diagram. The back-end server updates the central architecture diagram based on the foregoing interaction operation, and then the front-end server displays an updated central architecture diagram to the user.

The architecture diagram construction system 100 may alternatively be distributedly deployed in different environments, where the different environments include a terminal compute device and a data center in a cloud environment. For example, in the architecture diagram construction system 100, the obtaining module 101 and the layout module 102 are deployed in the data center in the cloud environment, and the visualization module 103 and the interaction module 104 are deployed on the terminal compute device.

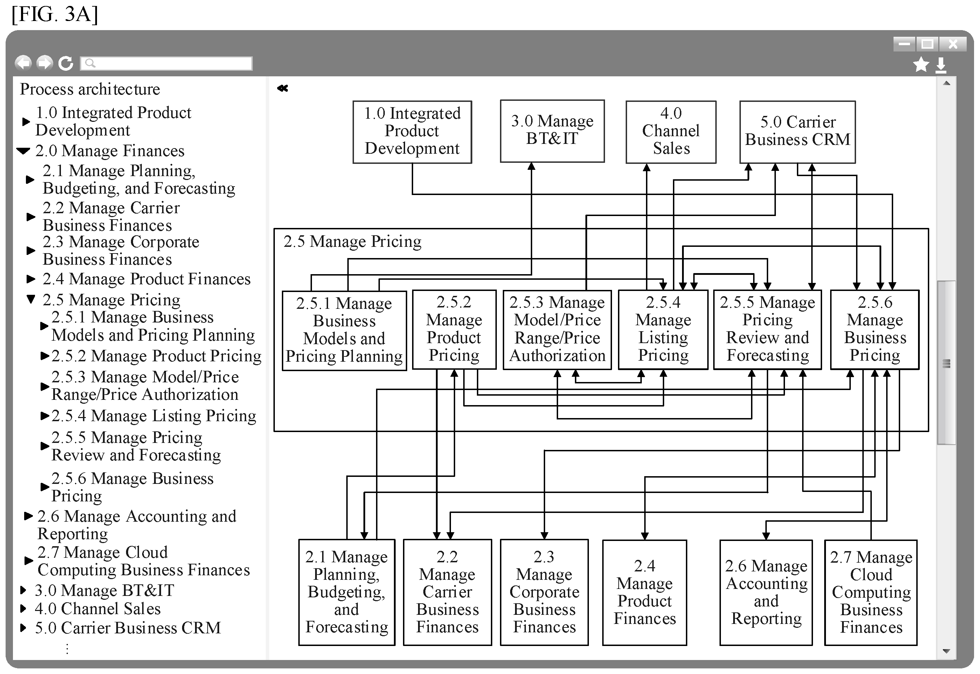

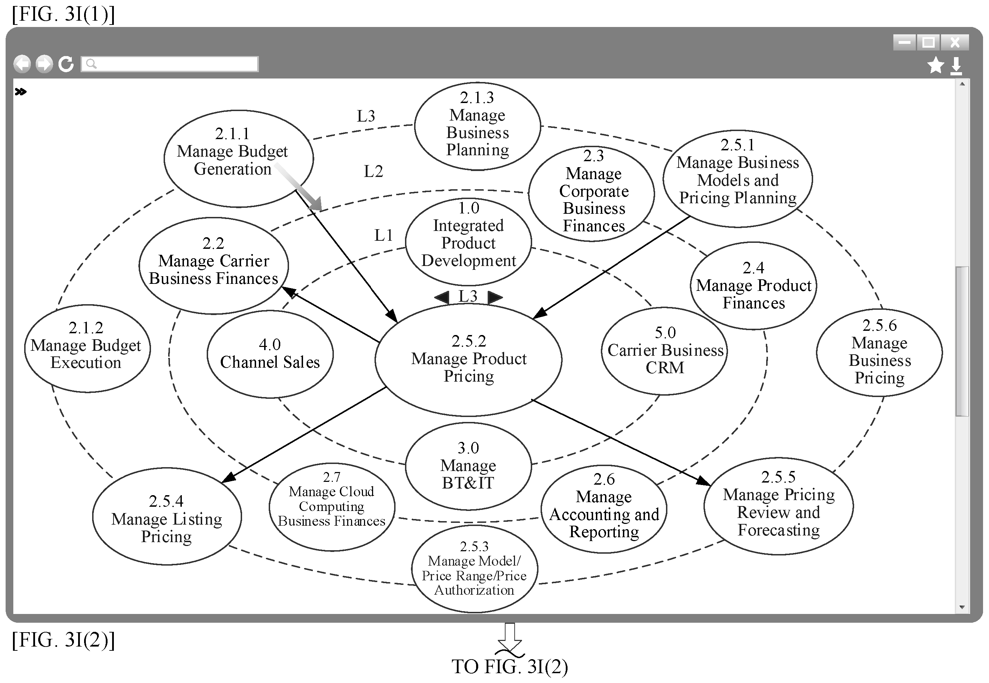

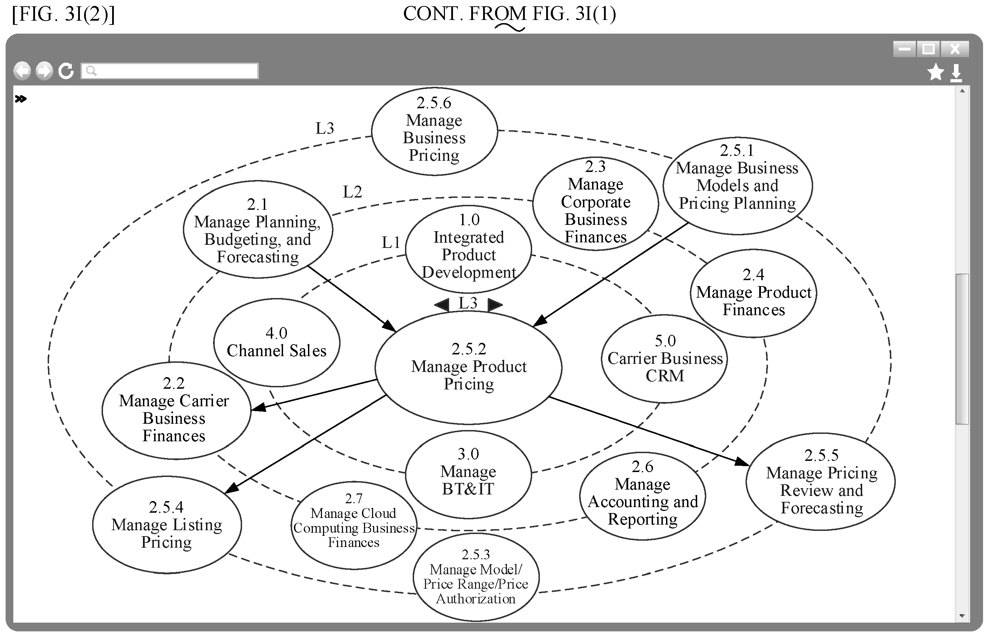

The following describes the architecture diagram construction system 100 from a perspective of the user by using scenarios described in FIG. 3A to FIG. 3I(1) and FIG. 3I(2).

In embodiments, an enterprise process architecture diagram is used as an example. The user may understand a relationship between enterprise processes by using the enterprise process architecture diagram, for example, levels, classification, and boundaries/scope of the enterprise processes, and an integration relationship between the enterprise processes (for example, an input/output relationship between the enterprise processes).

As shown in FIG. 3A, the architecture diagram construction system 100 provides a user interface, where the user interface includes a toolbar, a directory bar, and a display bar. The toolbar includes editing tools of an architecture diagram, such as an undo button, a restore button, a refresh button, a favorites button, and a download button. The directory bar is used to display related information of an enterprise process, including code, name, and level information of a process architecture corresponding to the enterprise process. For example, the information about the process architecture displayed in the directory bar shown in FIG. 3A includes: code 1.0, name "Integrated Product Development"; code 2.0, name "Manage Finances"; code 3.0, name "Manage Business Transformation and Information Technology (Manage BT&IT); code 4.0, name "Channel Sales"; and code 5.0, name "Carrier Business CRM". The display bar is used to display the central architecture diagram to the user.

When the user sequentially opens "2.0 Manage Finances" and "2.5 Manage Pricing" in the directory bar, the architecture diagram construction system 100 detects an operation performed on the directory bar, and displays the global architecture diagram in the display bar in response to the operation. The global architecture diagram includes node 1.0, node 3.0 to node 5.0, node 2.1 to node 2.7, and child nodes associated with node 2.5 (that is, node 2.5.1 to node 2.5.6), and edges between these nodes. Node 1.0 indicates a process architecture: code 1.0, name "Integrated Product Development"; node 3.0 indicates a process architecture: code 3.0, name "Manage BT&IT"; node 4.0 indicates a process architecture: code 4.0, name "Channel Sales"; and so on, with each node in the global architecture diagram indicating one process architecture. An edge in the global architecture diagram indicates an integration relationship between process architectures indicated by nodes at two ends of the edge. The integration relationship between process architectures indicated by each edge is not described herein. Based on the global architecture diagram, the user may observe lower-layer process architectures of "Manage Pricing" (for example, "Manage Business Models and Pricing Planning" and "Manage Product Pricing") and a relationship between these process architectures and other process architectures (for example, "Integrated Product Development" and "Manage Planning, Budgeting, and Forecasting").

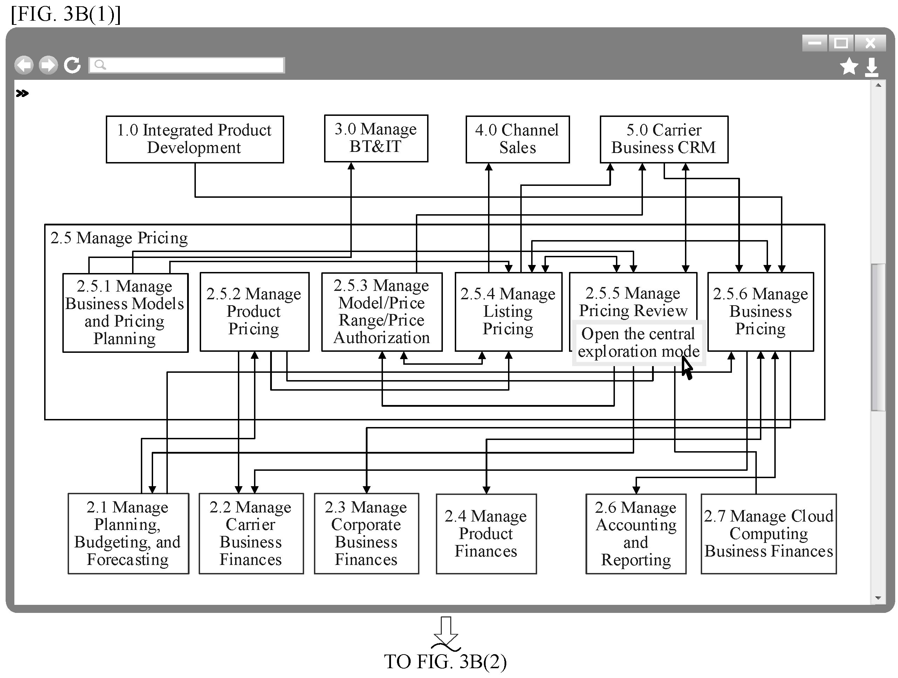

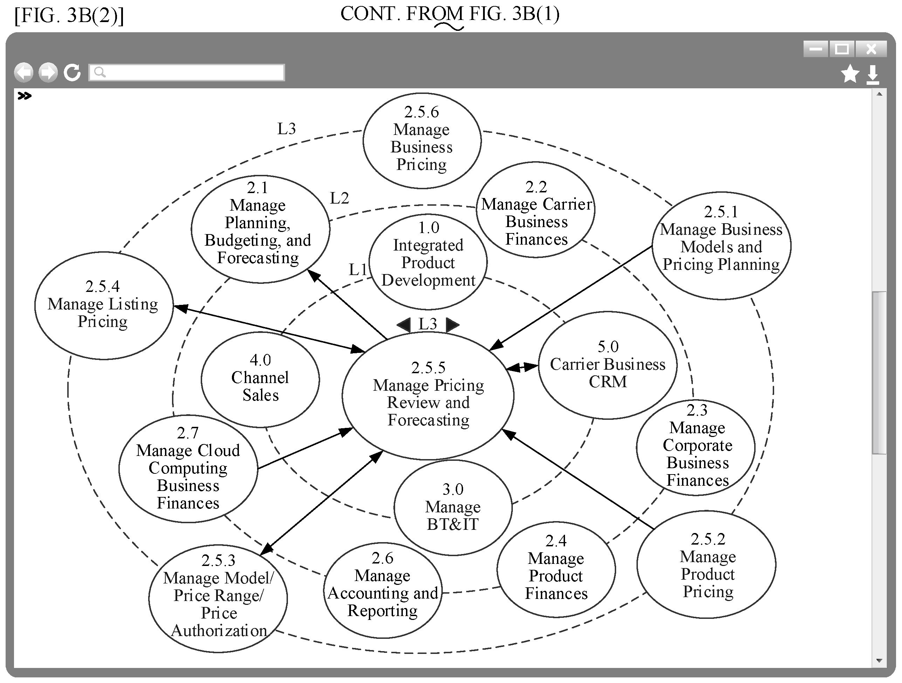

As shown in FIG. 3B(1) and FIG. 3B(2), when the user wants to focus on "Manage Pricing Review and Forecasting", the user may select an option of "Open the central exploration mode" for node 2.5.5 in the global architecture diagram shown in FIG. 3A. Correspondingly, the architecture diagram construction system 100 detects the operation performed on node 2.5.5, and displays the central architecture diagram in the display bar in response to the operation. It can be learned from the figure that the central node in the central architecture diagram is node 2.5.5, and other nodes are arranged into three ring layers centered on node 2.5.5 based on levels (L1, L2, and L3 shown in the figure) of process architectures indicated by the nodes. The central architecture diagram further includes an edge connected to node 2.5.5, that is, an edge between node 2.5.5 and node 5.0, an edge between node 2.5.5 and node 2.1, an edge between node 2.5.5 and node 2.7, an edge between node 2.5.5 and node 2.5.1, an edge between node 2.5.5 and node 2.5.2, an edge between node 2.5.5 and node 2.5.3, and an edge between node 2.5.5 and node 2.5.4. Compared with the global architecture diagram shown in FIG. 3A, the central architecture diagram shown in FIG. 3B(1) and FIG. 3B(2) provides the user with another perspective on "Manage Pricing Review and Forecasting", so that the user can more easily focus on "Manage Pricing Review and Forecasting" based on the central architecture diagram.

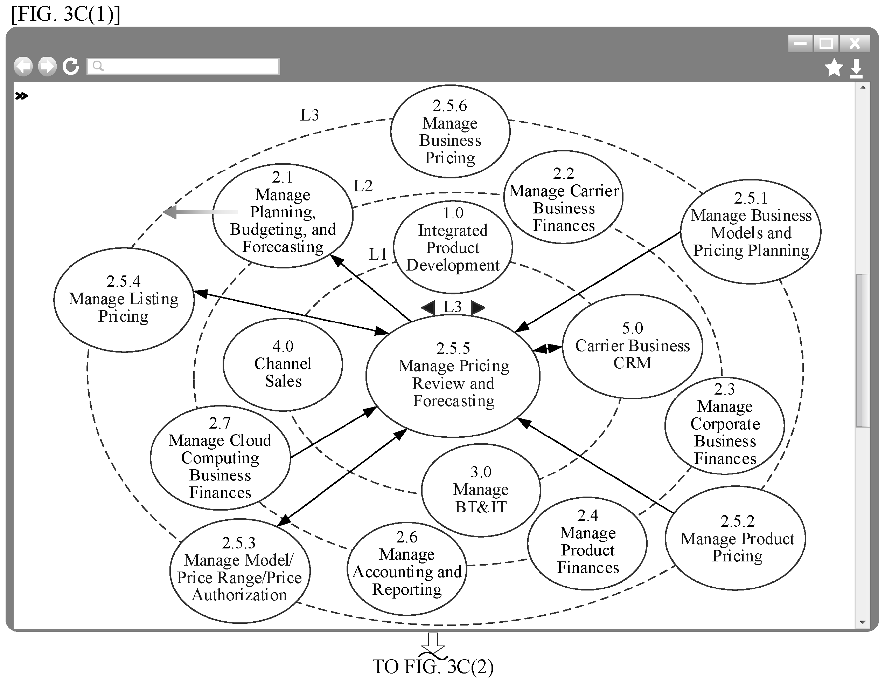

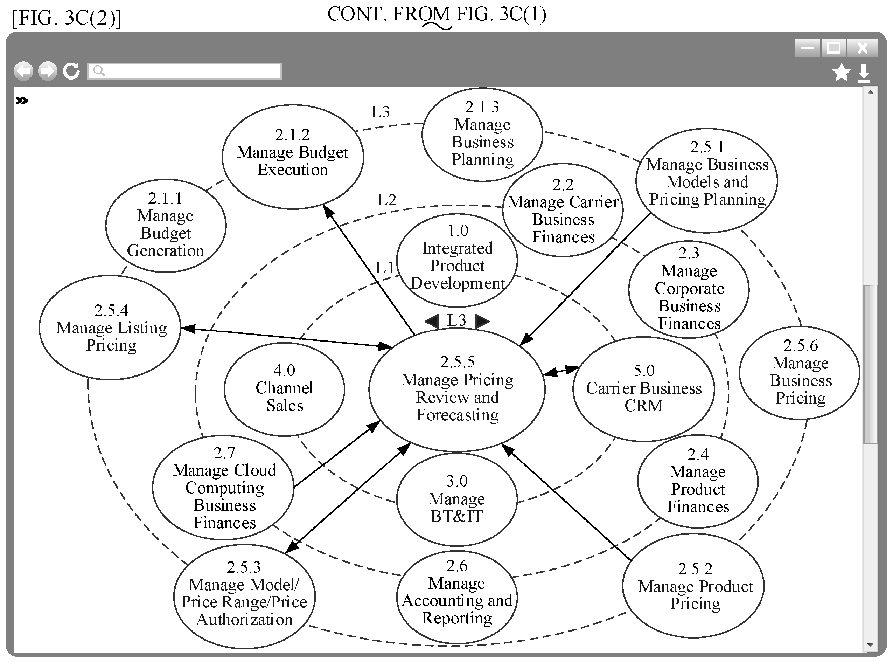

As shown in FIG. 3C(1) and FIG. 3C(2), when the user wants to further explore a relationship between "Manage Pricing Review and Forecasting" and "Manage Planning, Budgeting, and Forecasting", the user may select node 2.1 at a middle ring layer in the central architecture diagram and move node 2.1 to an outer ring layer. Correspondingly, the architecture diagram construction system 100 detects the operation performed on node 2.1, updates the central architecture diagram in response to the operation, and displays an updated central architecture diagram in the display bar. It can be learned from the figure that, in the updated central architecture diagram, node 2.1.1 to node 2.1.3 and an edge between node 2.1.2 and node 2.5.5 are added, and node 2.6 and an edge between node 2.6 and node 2.5.5 are hidden. Therefore, based on the updated central architecture diagram, the user may observe lower-layer process architectures of "Manage Planning, Budgeting, and Forecasting", that is, "Manage Budget Generation", "Manage Budget Execution", and "Manage Business Planning", where only "Manage Budget Execution" in the three process architectures has an integration relationship with "Manage Pricing Review and Forecasting", and details of the integration relationship.

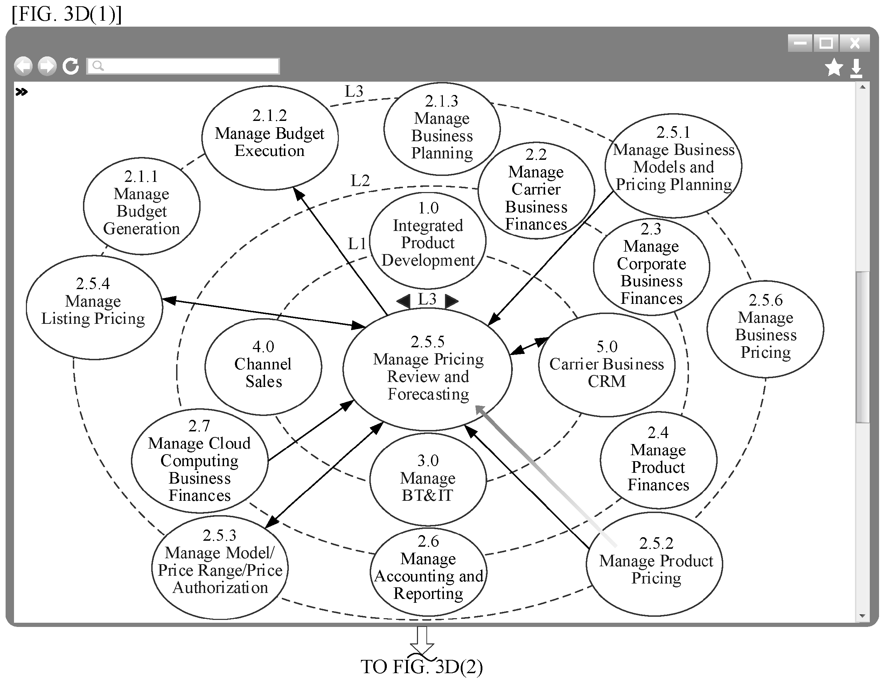

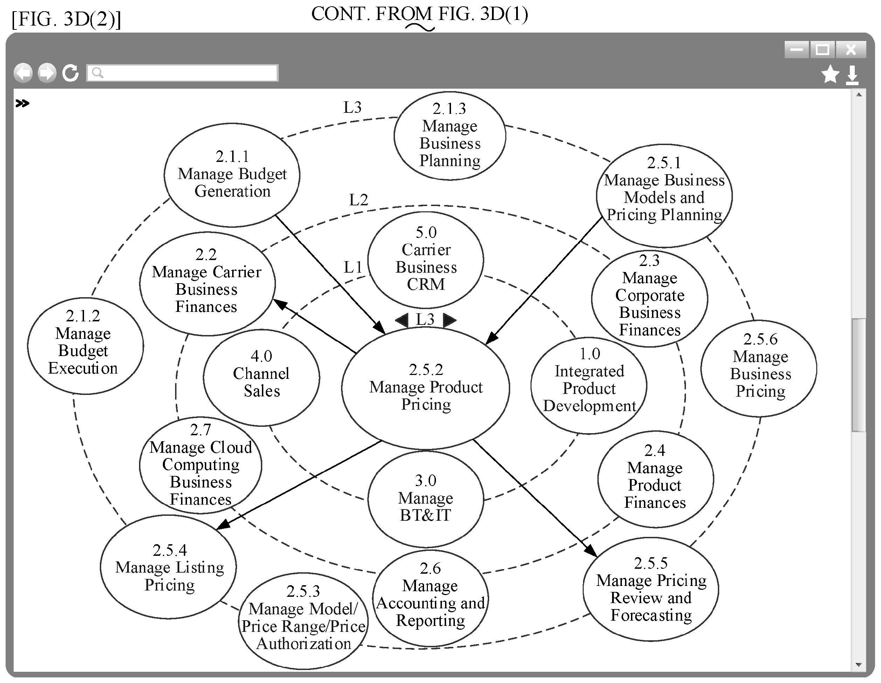

As shown in FIG. 3D(1) and FIG. 3D(2), when the user wants to focus on "Manage Product Pricing", the user may select node 2.5.2 at an outer ring layer in the central architecture diagram and move node 2.5.2 to an area in which node 2.5.5 is located. Correspondingly, the architecture diagram construction system 100 detects the operation performed on node 2.5.2, updates the central architecture diagram in response to the operation, and displays an updated central architecture diagram in the display bar. It can be learned from the figure that a central node in the updated central architecture diagram is node 2.5.2, and other nodes are arranged into three ring layers by using node 2.5.2 as a center. The updated central architecture diagram further includes an edge connected to node 2.5.2, that is, an edge between node 2.5.2 and node 2.2, an edge between node 2.5.2 and node 2.1.1, an edge between node 2.5.2 and node 2.5.1, an edge between node 2.5.2 and node 2.5.4, and an edge between node 2.5.2 and node 2.5.5. The central architecture diagram provides the user with another perspective on "Manage Product Pricing", so that the user can focus on "Manage Product Pricing".

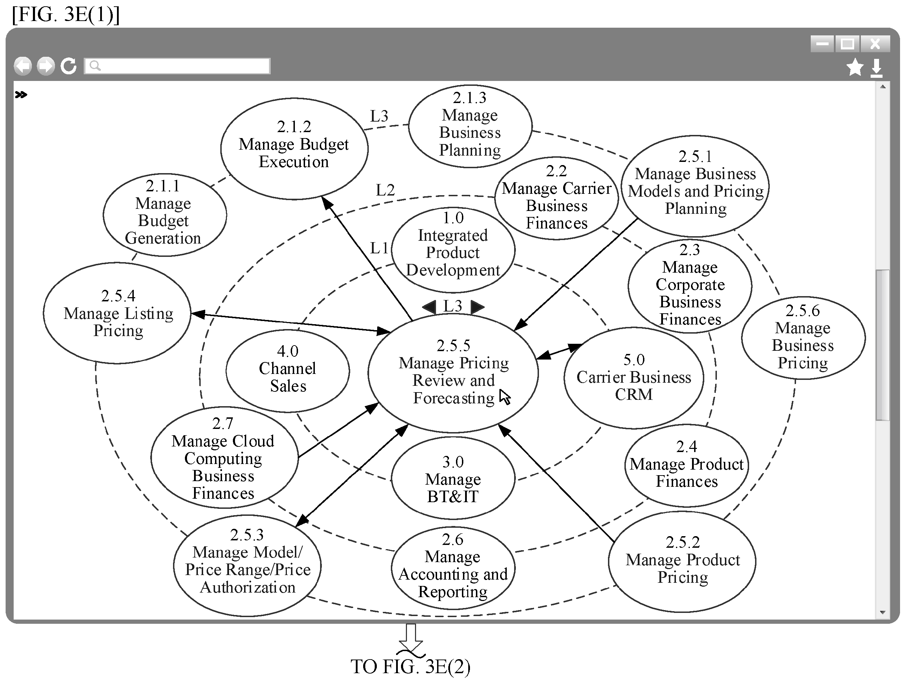

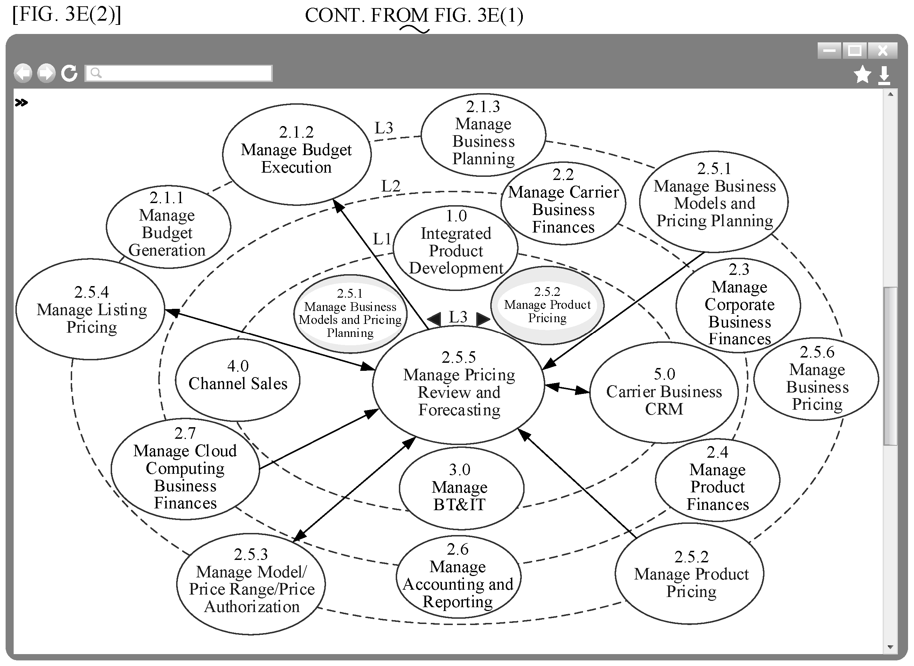

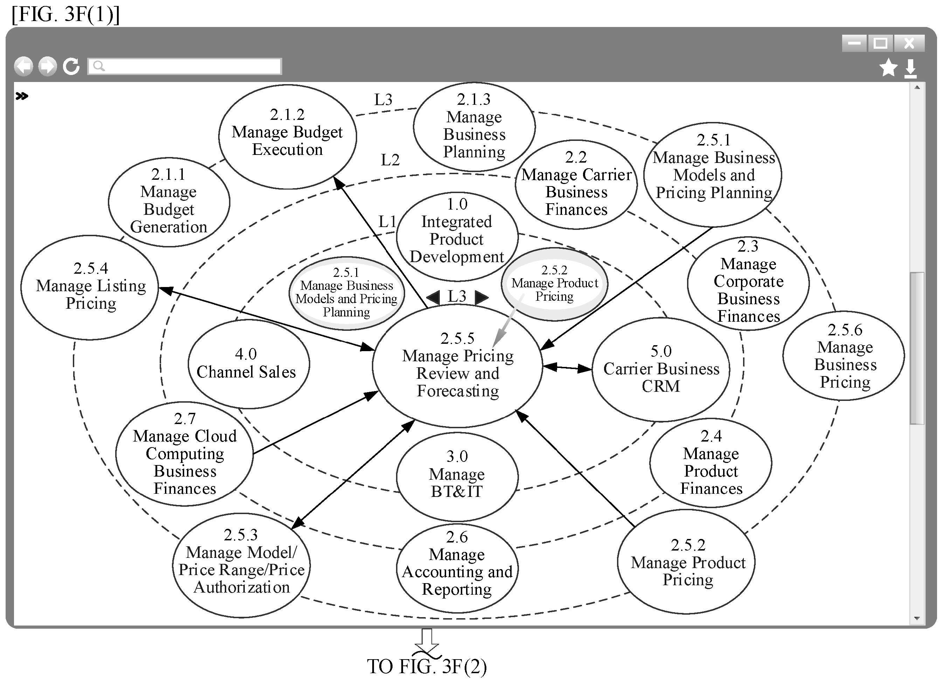

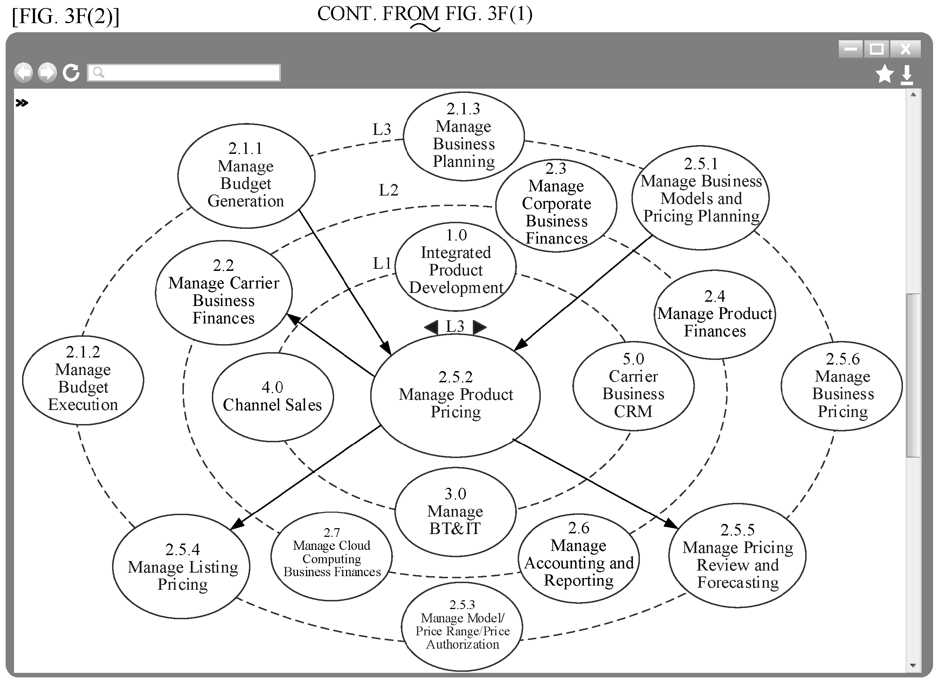

In addition, as shown in FIG. 3E(1) and FIG. 3E(2), when the user wants to focus on "Manage Product Pricing", the user may also hover a mouse over node 2.5.5 in the central architecture diagram. Correspondingly, the architecture diagram construction system 100 detects the operation performed on node 2.5.5, and in response to the operation, displays, near node 2.5.5, nodes corresponding to the process architecture at the level L3 (shown as node 2.5.1 and node 2.5.2 in the figure). Then, as shown in FIG. 3F(1) and FIG. 3F(2), the user selects node 2.5.2 near node 2.5.5 and moves node 2.5.2 to an area in which node 2.5.5 is located. Correspondingly, the architecture diagram construction system 100 detects the operation performed on node 2.5.2, updates the central architecture diagram in response to the operation, and displays an updated central architecture diagram in the display bar. It can be learned from the figure that a central node in the updated central architecture diagram is node 2.5.2, and other nodes are arranged into three ring layers by using node 2.5.2 as a center. The updated central architecture diagram further includes an edge connected to node 2.5.2, that is, an edge between node 2.5.2 and node 2.2, an edge between node 2.5.2 and node 2.1.1, an edge between node 2.5.2 and node 2.5.1, an edge between node 2.5.2 and node 2.5.4, and an edge between node 2.5.2 and node 2.5.5. The central architecture diagram provides the user with another perspective on "Manage Product Pricing", so that the user can focus on "Manage Product Pricing".

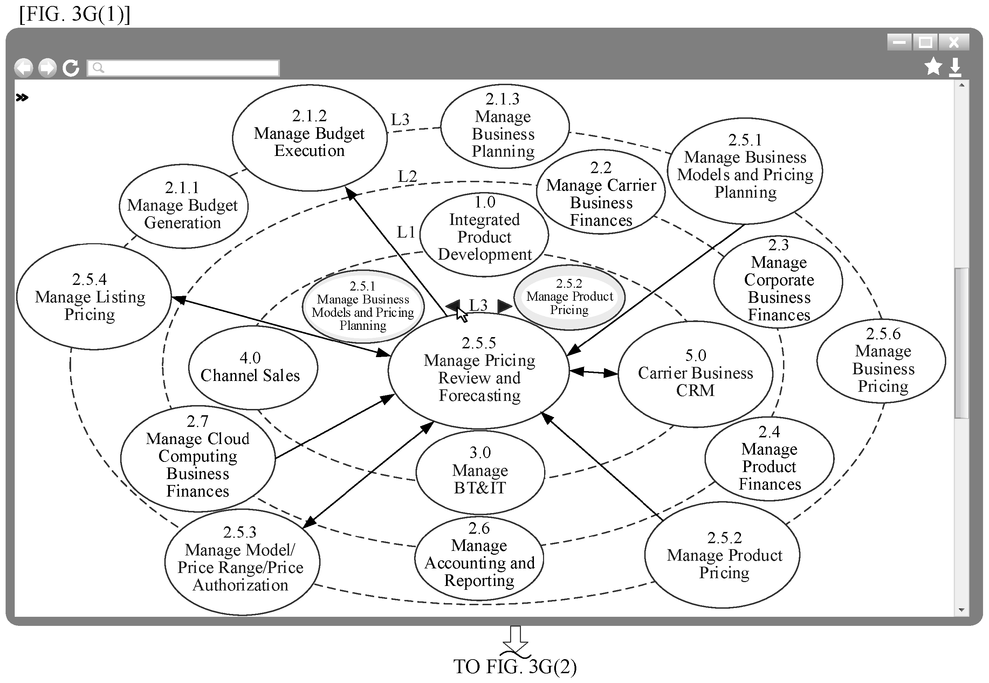

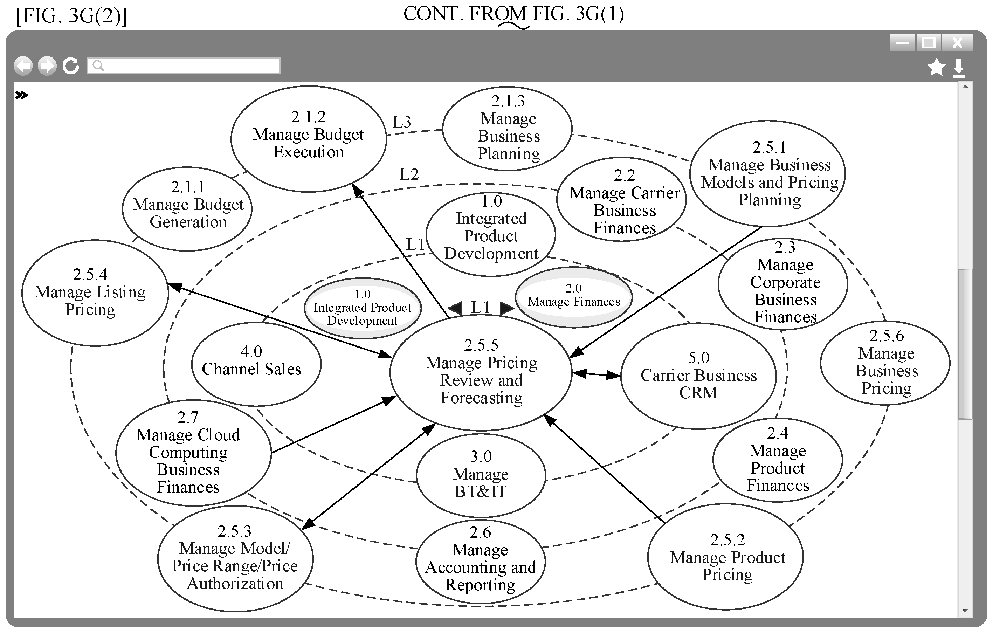

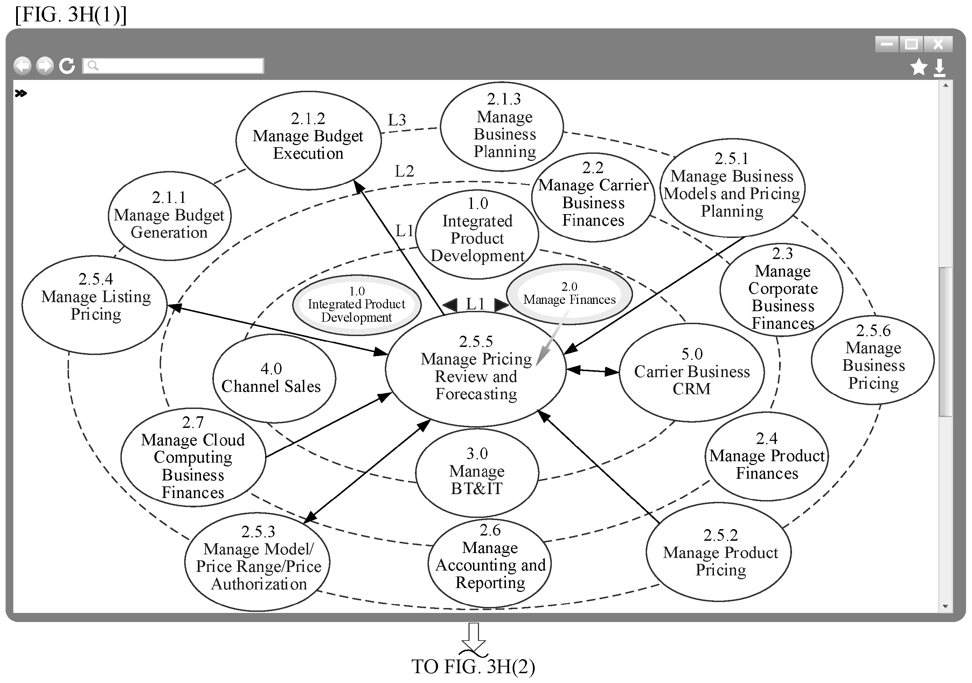

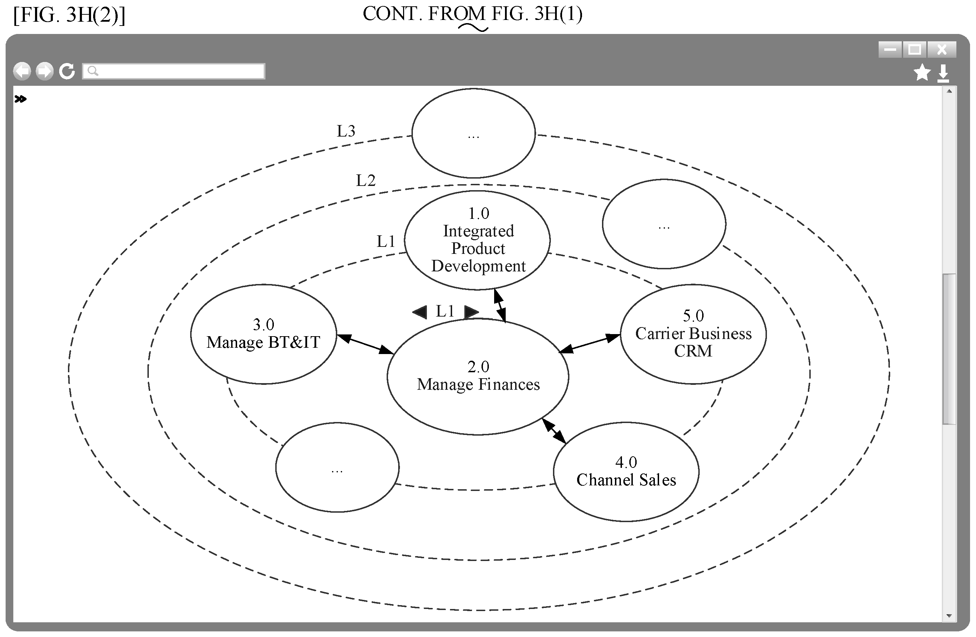

It can be learned from FIG. 3E(1) and FIG. 3E(2) that, when the user hovers the mouse over node 2.5.5 in the central architecture diagram, the architecture diagram construction system 100 displays, near node 2.5.5, the nodes corresponding to the process architecture at the level L3. As shown in FIG. 3G(1) and FIG. 3G(2), when the user wants to display, near node 2.5.5, nodes corresponding to the process architecture at the level L1, the user may click a scroll-up button above node 2.5.5 and set the level to L1. Correspondingly, the architecture diagram construction system 100 detects the foregoing operation, and in response to the operation, displays, near node 2.5.5, the nodes corresponding to the process architecture at the level L1 (shown as node 1.0 and node 2.0 in the figure). When the user wants to focus on "Manage Finances", as shown in FIG. 3H(1) and FIG. 3H(2), the user selects node 2.0 and moves node 2.0 to an area in which node 2.5.5 is located. Correspondingly, the architecture diagram construction system 100 detects the operation performed on node 2.0, updates the central architecture diagram in response to the operation, and displays an updated central architecture diagram in the display bar. It can be learned from the figure that a central node in the updated central architecture diagram is node 2.0, and other nodes are arranged by using node 2.0 as a center. The updated central architecture diagram further includes an edge on node 2.0, for example, an edge between node 2.0 and node 1.0, an edge between node 2.0 and node 3.0, an edge between node 2.0 and node 4.0, and an edge between node 2.0 and node 5.0. The central architecture diagram provides the user with another perspective on "Manage Finances", so that the user can focus on "Manage Finances".

As shown in FIG. 3I(1) and FIG. 3I(2), when the user wants to view an upper-layer process architecture of "Manage Budget Generation", the user may select node 2.1.1 at an outer ring layer in the central architecture diagram and move node 2.1.1 to a middle ring layer. Correspondingly, the architecture diagram construction system 100 detects the operation performed on node 2.1.1, updates the central architecture diagram in response to the operation, and displays an updated central architecture diagram in the display bar. It can be learned from the figure that, in the updated central architecture diagram, node 2.1 and an edge between node 2.1 and node 2.5.2 are added, and node 2.1.1 to node 2.1.3 and an edge between node 2.1.1 and node 2.5.2 are hidden. Based on the updated central architecture diagram, the user may observe an upper-layer process architecture of "Manage Budget Generation", "Manage Budget Execution", and "Manage Business Planning", that is, "Manage Planning, Budgeting, and Forecasting", and an integration relationship between "Manage Planning, Budgeting, and Forecasting" and "Manage Product Pricing".

It should be understood that, for ease of displaying the architecture diagram, the user interfaces shown in FIG. FIG. 3B(1) and FIG. 3B(2) to FIG. 3I(1) and FIG. 3I(2) all hide the directory bar. It should be further understood that FIG. 3A to FIG. 3I(1) and FIG. 3I(2) merely describe an example of an application scenario of the architecture diagram construction system 100. In actual application, the architecture diagram construction system 100 may be further applied to a plurality of other scenarios. For example, the central architecture diagram constructed by the architecture diagram construction system 100 may alternatively be an organization architecture diagram, to display an organization structure and a functional relationship of the enterprise to the user. For another example, the central architecture diagram constructed by the architecture diagram construction system 100 may alternatively be an architecture diagram about a network directory, to display the network directory to the user, so that the user can search for and browse required information.

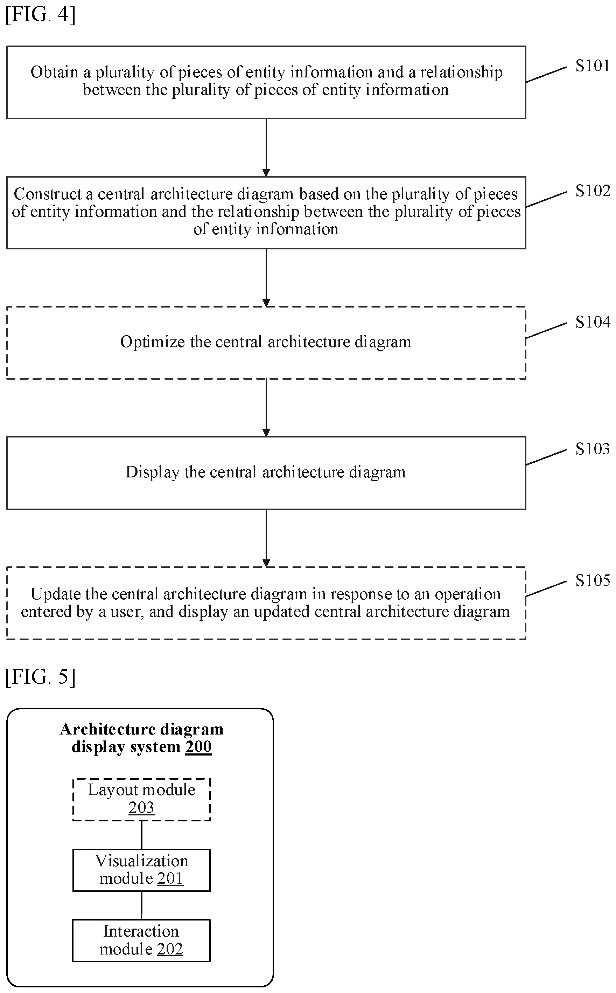

The following further describes functions of the architecture diagram construction system 100 with reference to a schematic flowchart of an architecture diagram generation method shown in FIG. 4.

S101: The architecture diagram construction system 100 obtains a plurality of pieces of entity information and a relationship between the plurality of pieces of entity information.

For descriptions of the entity information and the relationship between the entity information, refer to the foregoing descriptions. Details are not described herein again.

Specifically, the architecture diagram construction system 100 may obtain the plurality of pieces of entity information and the relationship between the plurality of pieces of entity information in any one of the following manners:
Manner 1: The architecture diagram construction system 100 obtains the plurality of pieces of entity information and the relationship between the plurality of pieces of entity information from a database.

Specifically, the database stores the plurality of pieces of entity information and the relationship between the plurality of pieces of entity information. The architecture diagram construction system 100 may obtain the plurality of pieces of entity information and the relationship between the plurality of pieces of entity information by accessing the database.

Manner 2: The architecture diagram construction system 100 receives an operation entered by a user (for example, an administrator user), and obtains the plurality of pieces of entity information and the relationship between the plurality of pieces of entity information based on the operation entered by the user.

Specifically, the architecture diagram construction system 100 provides an access interface, for example, an application programming interface (application programming interface, API) or a graphical user interface (graphical user interface, GUI). The user may upload a file package to the architecture diagram construction system 100 through the access interface, where the file package includes the plurality of pieces of entity information and the relationship between the plurality of pieces of entity information. After receiving the file package uploaded by the user, the architecture diagram construction system 100 may obtain the plurality of pieces of entity information and the relationship between the plurality of pieces of entity information by parsing the file package. In addition, the user may further create the plurality of pieces of entity information and the relationship between the plurality of pieces of entity information in the architecture diagram construction system 100 through the access interface, so that the architecture diagram construction system 100 obtains the plurality of pieces of entity information and the relationship between the plurality of pieces of entity information.

S102: The architecture diagram construction system 100 constructs a central architecture diagram based on the plurality of pieces of entity information and the relationship between the plurality of pieces of entity information.

Specifically, the architecture diagram construction system 100 determines first entity information, where the first entity information is one of the plurality of pieces of entity information. Then, the architecture diagram construction system 100 constructs the central architecture diagram based on the first entity information and the relationship between the plurality of pieces of entity information, where the central architecture diagram includes a central node, the central node indicates the first entity information, the central architecture diagram further includes a plurality of ring layers centered on the central node, each ring layer includes at least one node, and nodes at different ring layers have different relationships with the central node.

Optionally, the ring layer has various shapes, for example, a circle, an ellipse, a triangle, a square, and a pentagon. For example, in the central architecture diagram shown in FIG. 3B(1) and FIG. 3B(2), the shape of the ring layer is the circle.

Optionally, the central architecture diagram further includes an edge connected to the central node, and the edge indicates a relationship between entity information indicated by nodes at two ends of the edge. It should be understood that, when the central architecture diagram does not include an edge between nodes at a ring layer, the user may more intuitively observe a relationship between the entity information indicated by the central node and other entity information.

In some embodiments, the first entity information may be specified by the user. Specifically, after obtaining the plurality of pieces of entity information and the relationship between the plurality of pieces of entity information, the architecture diagram construction system 100 further constructs and displays a global architecture diagram based on the plurality of pieces of entity information and the relationship between the plurality of pieces of entity information. The global architecture diagram includes a plurality of nodes and a plurality of edges. Each node in the global architecture diagram indicates one piece of entity information in the plurality of pieces of entity information, and the edge in the global architecture diagram indicates a relationship between entity information indicated by nodes at two ends of the edge. Then, the architecture diagram construction system 100 receives information generated when the user clicks a first node in the global architecture diagram, and then determines, based on the information, the first entity information corresponding to the first node.

Alternatively, the first entity information may be dynamically determined by the architecture diagram construction system 100 based on an actual situation. For example, the architecture diagram construction system 100 randomly selects the first entity information from the plurality of pieces of entity information.

In some embodiments, the global architecture diagram includes a hierarchical relationship between nodes. For example, in the global architecture diagram shown in FIG. 3A, node 1.0 and node 3.0 to node 5.0 are nodes at a same level, node 2.1 to node 2.5 are nodes at a same level, node 2.5.1 to node 2.5.6 are nodes at a same level, and node 2.5.1 to node 2.5.6 are child nodes of node 2.5. Therefore, that the architecture diagram construction system 100 constructs the central architecture diagram based on the first entity information and the relationship between the first entity information includes: The architecture diagram construction system 100 determines levels of the plurality of pieces of entity information based on a hierarchical relationship between nodes in the global architecture diagram, and then determines an arrangement of the nodes at the plurality of ring layers based on the levels of the plurality of pieces of entity information. Then, the architecture diagram construction system 100 constructs the central architecture diagram based on the arrangement of the nodes at the plurality of ring layers. In the central architecture diagram, nodes at a same ring layer indicate entity information at a same level, and nodes at different ring layers indicate entity information at different levels. Correspondingly, that nodes at different ring layers have different relationships with the central node may include: Levels of entity information indicated by nodes at different ring layers have different relationships with a level of the first entity information.

Optionally, a level of entity information indicated by a node at a first ring layer is lower than a level of entity information indicated by a node at a second ring layer. The first ring layer is farther away from the central node than the second ring layer. For example, in the central architecture diagram shown in FIG. 3B(1) and FIG. 3B(2), a level of entity information indicated by a node at an outer ring layer is L3, a level of entity information indicated by a node at a middle ring layer is L2, and a level of entity information indicated by a node at an inner ring layer is L1. It should be understood that, when observing the first entity information indicated by the central node, the user may need to expand entity information related to the first entity information. As a result, a node corresponding to the expanded entity information is added to a ring layer at which a lower-level node is located, and the node corresponding to the expanded entity information is hidden at a ring layer at which a higher-level node is located. The ring layer at which the lower-level node is located is disposed on an outer side, and the ring layer at which the higher-level node is located is disposed on an inner side, so that nodes in the central architecture diagram can be arranged more properly and neatly.

In some embodiments, that the architecture diagram construction system 100 determines the arrangement of the nodes at the plurality of ring layers based on the levels of the plurality of pieces of entity information includes: The architecture diagram construction system 100 determines a quantity of nodes at each ring layer based on the levels of the plurality of pieces of entity information, and then determines an arrangement of the nodes at each ring layer based on the quantity of nodes at each ring layer. Optionally, to improve a visual effect of the central architecture diagram, nodes at a ring layer may be evenly arranged at the corresponding ring layer.

One ring layer may include a plurality of nodes, and the plurality of nodes may include a node connected to the central node, or may include a node that is not connected to the central node. Therefore, to help the user explore a relationship between the entity information indicated by the central node and other entity information, the node connected to the central node and the node that is not connected to the central node may be represented by diagram elements of different sizes. For ease of use, a size of a diagram element corresponding to a node is referred to as a size of the node for short below. In an example, a size of a node at a ring layer connected to the central node is greater than a size of a node at a ring layer that is not connected to the central node. For example, in the architecture diagram shown in FIG. 3B(1) and FIG. 3B(2), node 2.1 is connected to the central node (that is, node 2.5.5), node 2.2 is not connected to the central node, and a size of node 2.1 is greater than a size of node 2.2. Therefore, that the architecture diagram construction system 100 determines the arrangement of the nodes at the ring layer based on the quantity of nodes at the ring layer includes: The architecture diagram construction system 100 determines the arrangement of the nodes at the ring layer based on the quantity of the nodes at the ring layer and sizes of the nodes.

For example, FIG. 3B(1) and FIG. 3B(2) are used as an example to describe how the architecture diagram construction system 100 constructs the central architecture diagram shown in FIG. 3B(1) and FIG. 3B(2).

The architecture diagram construction system 100 receives an operation that the user clicks node 2.5.1 in the global architecture diagram and selects an option of "open the central exploration mode", and determines, based on the operation, the first entity information indicated by node 2.5.1, to determine that the central node in the central architecture diagram is a node indicating the first entity information. The architecture diagram construction system 100 further determines, based on the hierarchical relationship between the nodes in the global architecture diagram, the levels of the entity information indicated by the nodes in the global architecture diagram. In the global architecture diagram, node 1.0 and node 3.0 to node 5.0 indicate entity information at a same level, and the level is L1 displayed in FIG. 3B(1) and FIG. 3B(2); node 2.1 to node 2.7 indicate entity information at a same level, and the level is L2 displayed in FIG. 3B(1) and FIG. 3B(2); node 2.5.1 to node 2.5.6 indicate entity information at a same level, and the level is L3 displayed in FIG. 3B(1) and FIG. 3B(2); and L1 is higher than L2, and L2 is higher than L3. Then, the architecture diagram construction system determines, based on the levels of the entity information indicated by the nodes in the global architecture diagram, that the central architecture diagram includes three ring layers, where the first ring layer includes node 1.0 and node 3.0 to node 5.0, the second ring layer includes node 2.1 to node 2.4, node 2.6, and node 2.7, a third ring layer includes node 2.5.1 to node 2.5.4 and node 2.5.6, and the three ring layers are sequentially arranged as the first ring layer, the second ring layer, and the third ring layer.

For nodes at the first ring layer, because the layer includes four nodes, and entity information indicated by node 5.0 in the four nodes has an integration relationship with entity information indicated by the central node (that is, node 2.5.5), a size of node 5.0 is greater than sizes of the other three nodes. Based on this, node 1.0 and node 3.0 to node 5.0 may be evenly arranged at the first ring layer. For nodes at the second ring layer, because the layer includes six nodes, and entity information indicated by node 2.1 and node 2.7 in the six nodes has an integration relationship with entity information indicated by the central node, sizes of node 2.1 and node 2.7 are greater than sizes of the other four nodes. Based on this, node 2.1 to node 2.4, node 2.6, and node 2.7 may be evenly arranged at the second ring layer. For nodes at the third ring layer, because the layer includes five nodes, and entity information indicated by node 2.5.1 to node 2.5.4 in the five nodes has an integration relationship with entity information indicated by the central node, a size of node 2.5.6 is less than sizes of the other four nodes. Based on this, node 2.5.1 to node 2.5.4 and node 2.5.6 may be evenly arranged at the third ring layer. For a specific arrangement of the nodes at the three ring layers, refer to the central architecture diagram shown in FIG. 3B(1) and FIG. 3B(2). It should be understood that the arrangement of the nodes at each ring layer in the central architecture diagram shown in FIG. 3B(1) and FIG. 3B(2) is merely an example. In actual application, another arrangement may be used. For example, locations of node 1.0 and node 5.0 at the first ring layer may be exchanged.

S103: The architecture diagram construction system 100 displays the central architecture diagram.

To further improve a visualization effect of the central architecture diagram, before performing S103, the architecture diagram construction system 100 may further perform the following step (that is, S104).

S104: The architecture diagram construction system 100 optimizes the central architecture diagram.

Specifically, the architecture diagram construction system 100 may optimize the central architecture diagram in any one or more of the following steps:
Step 1: The architecture diagram construction system 100 determines, based on relative locations of nodes at two ends of an edge, locations of endpoints of the edge on the corresponding nodes.

Because the central node in the central architecture diagram may be connected to a plurality of nodes at a ring layer, that is, the central node may be connected to a plurality of edges, the plurality of edges connected to the central node may cross and stack with each other. To reduce crossing and stacking between edges in the central architecture diagram, the architecture diagram construction system 100 may determine, based on relative locations of the central node and a node at a ring layer connected to the central node, locations of endpoints of an edge between the central node and the node at the ring layer on the corresponding nodes. For example, in the central architecture diagram shown in FIG. 3B(1) and FIG. 3B(2), the central node (that is, node 2.5.5) is connected to seven nodes at a ring layer, and the seven edges do not cross and stack with each other.

Step 2: The architecture diagram construction system 100 configures the node at the ring layer connected to the central node and a node at another ring layer as different diagram elements, where the different diagram elements include diagram elements of different sizes, diagram elements of different colors, diagram elements of different shapes, and the like. For example, in the central architecture diagram shown in FIG. 3B(1) and FIG. 3B(2), sizes of nodes (for example, node 5.0 and node 2.1) at a ring layer connected to the central node (that is, node 2.5.5) are greater than sizes of nodes at other ring layers.

Step 3: The architecture diagram construction system 100 displays, in the central architecture diagram, a level of entity information indicated by any one or more nodes, so that the user can learn of the level of the entity information indicated by each node in the central architecture diagram. For example, in the central architecture diagram shown in FIG. 3B(1) and FIG. 3B(2), a level (that is, L3 in the figure) of entity information indicated by the central node (that is, node 2.5.5) is displayed above the node, a level (that is, L1 in the figure) of entity information indicated by nodes at this layer is displayed near an inner ring layer, and a level (that is, L2 in the figure) of entity information indicated by nodes at this layer is displayed near a middle ring layer, and a level (that is, L3 in the figure) of entity information indicated by nodes at this layer is displayed near an outer ring layer.

Step 4: The architecture diagram construction system 100 sets a location of the central node as a middle location of a canvas.

The canvas is a display area of the central architecture diagram. It should be understood that, when the central node is located at the middle location of the canvas, because the nodes at the ring layer are arranged by using the central node as a center, in this step, the entire central architecture diagram may be located in a middle area of the canvas, thereby improving a visual effect of the central architecture diagram.

Step 5: The architecture diagram construction system 100 configures a start point and an end point of any one or more edges in the central architecture diagram as different diagram elements. The different diagram elements include diagram elements of different colors, diagram elements of different shapes, diagram elements of different sizes, and the like. For example, for a unidirectional edge in the architecture diagram, the start point of the edge may be represented by a circle, and the end point of the edge may be represented by an arrow.

Step 6: The architecture diagram construction system 100 displays an identifier of any one or more nodes in the central architecture diagram.

The identifier of the node includes a code and/or a name of corresponding entity information. For example, an identifier of a node in the central architecture diagram shown in FIG. 3B(1) and FIG. 3B(2) includes a name and a code of a process architecture.

Step 7: The architecture diagram construction system 100 configures the central node and the node at the ring layer as different diagram elements, where the different diagram elements include diagram elements of different sizes, diagram elements of different colors, diagram elements of different shapes, and the like. For example, in the central architecture diagram shown in FIG. 3B(1) and FIG. 3B(2), a size of the central node is greater than a size of the node at the ring layer.

Step 8: The architecture diagram construction system 100 configures nodes at different ring layers in the central architecture diagram as different diagram elements, where the different diagram elements include diagram elements of different sizes, diagram elements of different colors, diagram elements of different shapes, and the like.

Step 9: The architecture diagram construction system 100 configures edges between the central node and the nodes at the different ring layers as different line segments, where the different line segments include line segments of different colors or different thicknesses, or the like.

After viewing the central architecture diagram displayed by the architecture diagram construction system 100, the user may further have a requirement for operating the central architecture diagram. For example, a node in the central architecture diagram is expanded, to view lower-layer entity information associated with entity information indicated by the expanded node. For another example, a node in the central architecture diagram is collapsed, to view upper-layer entity information associated with entity information indicated by the collapsed node. For still another example, the central node in the central architecture diagram is replaced based on a requirement, to focus on entity information indicated by a new central node. Therefore, after performing S103, the architecture diagram construction system 100 may further perform the following step (that is, S105):
S105: The architecture diagram construction system 100 updates the central architecture diagram in response to the operation entered by the user, and displays an updated central architecture diagram.

This step is described in the following three cases:
Case 1: The operation entered by the user is expanding a node a at a ring layer a in the central architecture diagram.

Specifically, the architecture diagram construction system 100 receives the operation that is entered by the user to expand the node a, then updates the central architecture diagram based on the operation of expanding the node a, and next displays an updated central architecture diagram. It should be understood that a specific operation performed by the user to expand the node a is not limited in this embodiment of this application. For example, the operation may be selecting the node a and moving the node a to a ring layer b, where a level of entity information indicated by a node at the ring layer a is higher than a level of entity information indicated by a node at the ring layer b. For another example, the operation may be selecting a related option for expanding the node a in the user interface, or filling in related information for expanding the node a in the user interface.

In some embodiments, the node a is any node at the ring layer a, the node a indicates second entity information in the plurality of pieces of entity information, and the second entity information is associated with one or more pieces of lower-layer entity information. In this case, that the architecture diagram construction system 100 updates the central architecture diagram based on the operation of expanding the node a includes: The architecture diagram construction system 100 hides the node a at the ring layer a, and displays a child node associated with the node a at the ring layer b, where the child node associated with the node a indicates lower-layer entity information of the second entity information. In addition, when the node a is connected to the central node by using an edge, the architecture diagram construction system 100 further hides an edge between the node a and the central node, and displays an edge between the child node associated with the node a and the central node. It should be understood that the updated central architecture diagram may include one or more child nodes associated with the node a. When the diagram includes one child node associated with the node a, the child node indicates one piece of lower-layer entity information of the second entity information. When the diagram includes a plurality of child nodes associated with the node a, each child node in the plurality of child nodes indicates one piece of lower-layer entity information of the second entity information.

In some embodiments, that the architecture diagram construction system 100 displays the child node associated with the node a at the ring layer b includes: The architecture diagram construction system 100 determines, based on the quantity of child nodes associated with the node a, an arrangement of the child nodes associated with the node a, and then displays the child nodes associated with the node a at the ring layer b. More specifically, the architecture diagram construction system 100 determines, based on a relationship between the entity information indicated by the child nodes associated with the node a and the first entity information, sizes of the child nodes associated with the node a, and then determines, based on the quantity of child nodes associated with the node a and the sizes of the child nodes, the arrangement of the child nodes associated with the node a, to display the child nodes associated with the node a at the ring layer b.

Optionally, the ring layer b further includes a node b, and there may be one or more nodes b. The architecture diagram construction system 100 further adjusts a location of the node b at the ring layer b, so that the node b is not blocked by the child node associated with the node a when the updated central architecture diagram is displayed. In some embodiments, the node b may be a node affected by the foregoing expansion operation. To be specific, after the child node associated with the node a is displayed at the ring layer b, if the location of the node b is not adjusted, the node b is blocked by the child node associated with the node a. In specific implementation, the architecture diagram construction system 100 may adjust the location of the node b in the following manner: The architecture diagram construction system 100 adjusts the location of the node b based on a location of the child node associated with the node a.

Optionally, the ring layer a further includes a node c, and there may be one or more nodes c. The architecture diagram construction system 100 further adjusts a location of the node c at the ring layer a, so that nodes at the ring layer a are arranged properly and neatly when the updated central architecture diagram is displayed. In some embodiments, the node c may be a node affected by the foregoing expansion operation. To be specific, after the node a at the ring layer a is hidden, if the location of the node c is not adjusted, a distance between the node c and an adjacent node is large, affecting a visual effect of the architecture diagram. In specific implementation, the architecture diagram construction system 100 may adjust the location of the node c in the following manner: The architecture diagram construction system 100 adjusts the location of the node c based on a location of the node a in the original central architecture diagram.

For example, the central architecture diagram shown in FIG. 3C(1) and FIG. 3C(2) is used as an example to describe how the architecture diagram construction system 100 updates the central architecture diagram based on the operation that is entered by the user to expand the node. It can be learned from FIG. 3C(1) and FIG. 3C(2) that, when the architecture diagram construction system 100 detects an operation that is entered by the user to expand node 2.1 (that is, select node 2.1 and move node 2.1 to an outer ring layer), in response to the operation, the architecture diagram construction system 100 hides node 2.1 and an edge between node 2.1 and node 2.5.5 at a middle ring layer, and displays child nodes of node 2.6 (that is, node 2.1.1 to node 2.1.3) and an edge between node 2.1.2 and node 2.5.5 at the outer ring layer. The architecture diagram construction system 100 further correspondingly adjusts an arrangement of the nodes at the middle ring layer and the outer ring layer, so that the nodes at the two ring layers are evenly arranged.

Case 2: The operation entered by the user is collapsing a node d at a ring layer c in the central architecture diagram.

Specifically, the architecture diagram construction system 100 receives the operation that is entered by the user to collapse the node d, then updates the central architecture diagram based on the collapsing operation, and next displays an updated central architecture diagram. It should be understood that a specific operation performed by the user to collapse the node d is not limited in this embodiment of this application. For example, the operation may be selecting the node d and moving the node d to a ring layer d, where a level of entity information indicated by a node at the ring layer d is higher than a level of entity information indicated by a node at the ring layer c. For another example, the operation may be selecting a related option for collapsing the node d in the user interface, or filling in related information for collapsing the node d in the user interface.

In some embodiments, that the architecture diagram construction system 100 updates the central architecture diagram based on the operation of collapsing the node d includes: The architecture diagram construction system 100 hides the node d and/or a node s at the ring layer c, and displays a parent node of the node d at the ring layer d, where the node d indicates third entity information in the plurality of pieces of entity information, the node s indicates fourth entity information in the plurality of pieces of entity information, and the parent node associated with the node d and a parent node associated with the node s are a same node, and lower-layer entity information associated with entity information indicated by the parent node associated with the node d includes the third entity information and the fourth entity information. In addition, when the node d is connected to the central node by using an edge, the architecture diagram construction system 100 further hides an edge between the node d and the central node, and displays an edge between the parent node associated with the node d and the central node.

In some embodiments, that the architecture diagram construction system 100 displays the parent node associated with the node d at the ring layer d includes: The architecture diagram construction system 100 determines an arrangement of the node d, and then displays the node d at the ring layer d. More specifically, the architecture diagram construction system 100 determines a size of the node d based on a relationship between the entity information indicated by the node d and the entity information indicated by the central node, and then determines the arrangement of the node d based on the size of the node d, to display the node d at the ring layer d.

Optionally, the ring layer d further includes a node e, and there may be one or more nodes e. The architecture diagram construction system 100 further adjusts a location of the node e at the ring layer d, so that the node e is not blocked by the parent node associated with the node d when the updated central architecture diagram is displayed. In some embodiments, the node e may be a node affected by the foregoing collapsing operation. To be specific, after the parent node associated with the node d is displayed at the ring layer d, if the location of the node e is not adjusted, the node e is blocked by the parent node associated with the node d. In specific implementation, the architecture diagram construction system 100 may adjust the location of the node e in the following manner: The architecture diagram construction system 100 adjusts the location of the node e based on a location of the parent node associated with the node d.

Optionally, the ring layer c further includes a node f, and there may be one or more nodes f. The architecture diagram construction system 100 further adjusts a location of the node f at the ring layer c, so that nodes at the ring layer c are arranged properly and neatly when the updated central architecture diagram is displayed. In some embodiments, the node f may be a node affected by the foregoing collapsing operation. To be specific, after the node d and/or a node s at the ring layer c are/is hidden, if the location of the node f is not adjusted, a distance between the node f and an adjacent node is large, affecting a visual effect of the central architecture diagram. In specific implementation, the architecture diagram construction system 100 may adjust the location of the node f in the following manner: The architecture diagram construction system 100 adjusts the location of the node f based on a location of the node d and/or the node s in the original central architecture diagram.

For example, the central architecture diagram shown in FIG. 3I(1) and FIG. 3I(2) is used as an example to describe how the architecture diagram construction system 100 updates the central architecture diagram based on the operation that is entered by the user to collapse the node. It can be learned from FIG. 3I(1) and FIG. 3I(2) that, when the architecture diagram construction system 100 detects an operation that is entered by the user to collapse node 2.1.1 (that is, select node 2.1.1 and move node 2.1.1 to a middle ring layer), in response to the operation, the architecture diagram construction system 100 hides node 2.1.1 to node 2.1.3 and an edge between node 2.1.1 and node 2.5.2 at an outer ring layer, and displays a parent node of node 2.1.1 (that is, node 2.1) and an edge between node 2.1 and node 2.5.2 at the middle ring layer. The architecture diagram construction system 100 further correspondingly adjusts an arrangement of the nodes at the middle ring layer and the outer ring layer, so that the nodes at the two ring layers are evenly arranged.

Case 3: The operation entered by the user is replacing the central node in the central architecture diagram.

Specifically, the architecture diagram construction system 100 receives the operation that is entered by the user to replace the central node, then updates the central architecture diagram based on the operation of replacing the central node, and next displays an updated central architecture diagram. The updated central architecture diagram includes a new central node and nodes at a plurality of ring layers centered on the new central node. The updated central architecture diagram further includes an edge between the new central node and the node at the ring layer.

In some embodiments, the user may replace the central node in the central architecture diagram in any one or more of the following manners:
Manner 1: The user selects a node m at a ring layer m and moves the node m to an area in which the original central node is located, where the area in which the original central node is located includes a location of the original central node and an area near the original central node. For example, in FIG. 3D(1) and FIG. 3D(2), the user selects node 2.5.2 at an outer ring layer and moves node 2.5.2 to a location of the central node (that is, node 2.5.5), to replace the original central node with node 2.5.2.
Manner 2: The user selects a replaceable node and moves the replaceable node to an area in which the original central node is located, where the replaceable node may be a node displayed in the central architecture diagram when the architecture diagram construction system 100 detects the operation performed by the user on the original central node.

Optionally, the user performs various operations on the original central node. For example, the user clicks the original central node, or the user hovers a mouse over the original central node (for example, in FIG. 3E(1) and FIG. 3E(2), after the user hovers the mouse over node 2.5.5, the architecture diagram construction system 100 displays node 2.5.1 and node 2.5.2 near node 2.5.5). This is not limited in this embodiment of this application.

Optionally, there may be one or more replaceable nodes, and the replaceable node may be located near the original central node. To help the user observe the replaceable node, the architecture diagram construction system 100 may configure the replaceable node and another node (including the original central node and the node at the ring layer) as different diagram elements. For example, the replaceable node is represented by a diagram element in a rotating state, and the another node is represented by a diagram element in a static state. For another example, the replaceable node and the another node are represented by diagram elements of different colors, sizes, or shapes. Using the central architecture diagram shown in FIG. 3E(1) and FIG. 3E(2) as an example, replaceable nodes (that is, node 2.5.1 and node 2.5.2) are located near the original central node (that is, node 2.5.5), and colors and sizes of the replaceable nodes are different from those of the original central node and a node at a ring layer.

Optionally, the replaceable node may indicate entity information indicated by an existing node in the central architecture diagram. For example, entity information indicated by the two replaceable nodes shown in FIG. 3E(1) and FIG. 3E(2) is correspondingly the same as entity information indicated by node 2.5.1 and node 2.5.2 at the outer ring layer in the figure. Alternatively, the replaceable node may indicate entity information indicated by a node that is not displayed in the central architecture diagram. For example, the replaceable node shown in FIG. 3G(1) and FIG. 3G(2) includes node 2.0, and the node is not displayed in the central architecture diagram. In this way, the user can flexibly select entity information for exploration.

Optionally, the replaceable node may be specified by the user based on a level indicated by the entity information. In an example, the central architecture diagram includes a scroll-up/down button. When the user hovers the mouse over the location of the original central node, the replaceable node displayed in the central architecture diagram is at a same level as the entity information indicated by the original central node. For example, in FIG. 3E(1) and FIG. 3E(2), the replaceable nodes (that is, node 2.5.1 and node 2.5.2) in the central architecture diagram are at a same level as the entity information indicated by the original central node (that is, node 2.5.5), that is, L3. When the user clicks the scroll-up/down button, a level of the entity information indicated by the replaceable nodes displayed in the central architecture diagram is different from a level of the entity information indicated by the original central node. For example, in FIG. 3G(1) and FIG. 3G(2), the user clicks the scroll-up button, so that the replaceable nodes displayed in the central architecture diagram are nodes (that is, node 1.0 and node 2.0 in the figure) corresponding to entity information whose level is L1.

It should be understood that, in actual application, the user may further perform another operation to replace the central node. For example, the user may select a related option for replacing the central node in the user interface, or fill in related information for replacing the central node in the user interface. This is not limited in this embodiment of this application.

In some embodiments, that the architecture diagram construction system 100 updates the central architecture diagram based on the operation of replacing the central node includes: The architecture diagram construction system 100 determines a new central node and nodes at a plurality of ring layers centered on the new central node, determines an arrangement of the foregoing nodes, and obtains an updated central architecture diagram based on the arrangement of the foregoing nodes. A location of the new central node is the location of the original central node, and the other nodes are arranged at at least one of the ring layers by using the new central node as a center. It should be understood that, for ease of description, a process of how the architecture diagram construction system 100 determines the arrangement of the nodes at the ring layers in the updated central architecture diagram is not described in detail in this step. For details, refer to related steps in S102.

Optionally, because the technical solution provided in this embodiment of this application is to provide the user with another perspective on observing the entity information indicated by the central node, the node at the ring layer in the updated central architecture diagram may be determined by the architecture diagram construction system 100 based on the new central node, for example, may include a node corresponding to entity information that has an integration relationship with the entity information indicated by the new central node.

With reference to the architecture diagram construction system 100 shown in FIG. 1, the obtaining module 101, the layout module 102, the visualization module 103, and the interaction module 104 work together to implement the steps performed by the architecture diagram construction system 100 in the method embodiment described in FIG. 4. Specifically, the obtaining module 101 is configured to perform S101. The layout module 102 is configured to perform one or more of the following steps: S102 and the related step of updating the central architecture diagram in S105. The visualization module 103 is configured to perform one or more of the following steps: S103, S104, and the related step of displaying the updated central architecture diagram in S105. The interaction module 104 is configured to perform one or more of the following steps: the step of receiving the operation of clicking the first node in the global architecture diagram by the user in S102, and the step of receiving the operation entered by the user for the central architecture diagram in S105.

An embodiment of this application further provides an architecture diagram display system. As shown in FIG. 5, the architecture diagram display system 200 includes a visualization module 201 and an interaction module 202. Optionally, the architecture diagram display system 200 further includes a layout module 203. Specifically, the visualization module 201 is configured to perform one or more of the following steps: S103, S104, and the related step of displaying the updated central architecture diagram in S105. The interaction module 202 is configured to perform one or more of the following steps: the step of receiving the operation of clicking the first node in the global architecture diagram by the user in S102, and the step of receiving the operation entered by the user for the central architecture diagram in S105. The layout module 203 is configured to perform one or more of the following steps: S102 and the related step of updating the central architecture diagram in S105.

In this embodiment of this application, the architecture diagram display system 200 may be a software system, or may be a hardware device, or may be a combination of a software system and a hardware device.

When the architecture diagram display system 200 is the software system, the architecture diagram display system 200 may be deployed in a data center in a cloud environment. For example, the architecture diagram display system 200 is a cloud service provided by a cloud service provider. In specific implementation, the architecture diagram display system 200 may be independently deployed on one computing instance in the data center in the cloud environment, or may be distributedly deployed on a plurality of computing instances in the data center in the cloud environment, where the computing instance includes a server, a virtual machine, a container, and the like.

The architecture diagram display system 200 may alternatively be deployed on a terminal compute device. For example, the architecture diagram display system 200 is a source code or a component that may run on one or more terminal compute devices. In a possible deployment manner, in the architecture diagram display system 200, the visualization module 201 and the interaction module 202 are deployed on a front-end server, and the layout module 203 is deployed on a back-end server.

The architecture diagram display system 200 may alternatively be distributedly deployed in different environments, where the different environments include a terminal compute device and a data center in a cloud environment. For example, in the architecture diagram display system 200, the visualization module 201 and the interaction module 202 are deployed on the terminal compute device, and the layout module 203 is deployed in the data center in the cloud environment.

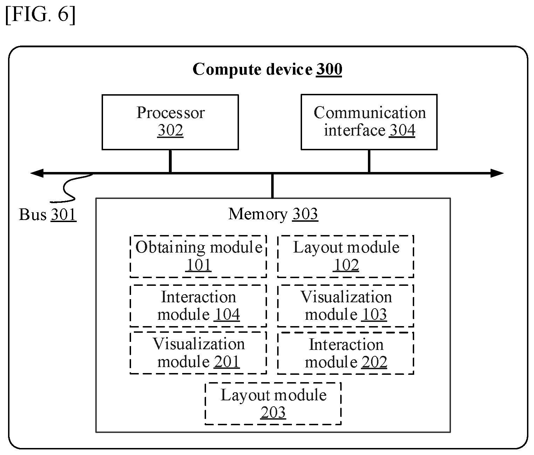

An embodiment of this application further provides a compute device. The compute device may be a terminal compute device, or may be a server in a data center in a cloud environment. As shown in FIG. 6, a compute device 300 includes a bus 301, a processor 302, a memory 303, and a communication interface 304. The processor 302, the memory 303, and the communication interface 304 communicate with each other through the bus 301.

The bus 301 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 6. However, this does not mean that the compute device 300 has only one bus or only one type of bus. The bus 301 may include a path for transmitting information between the components (for example, the processor 302, the memory 303, and the communication interface 304) of the compute device 300.

The processor 302 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 303 may include a volatile memory (volatile memory), for example, a random access memory (random access memory, RAM). The memory 303 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 303 stores executable program code. The processor 302 executes the executable program code stored in the memory 303 to perform some or all of the steps in S101 to S105. In other words, the memory 303 stores program code used to implement functions of the architecture diagram construction system 100 (including the obtaining module 101, the layout module 102, the visualization module 103, and the interaction module 104) and/or the architecture diagram display system 200 (including the visualization module 201, the interaction module 202, and the layout module 203).

The communication interface 304 uses a transceiver module such as but not limited to a network interface card or a transceiver, to implement communication between the compute device 300 and another device or a communication network. For example, the compute device 300 displays a central architecture diagram to a user through the communication interface 304.

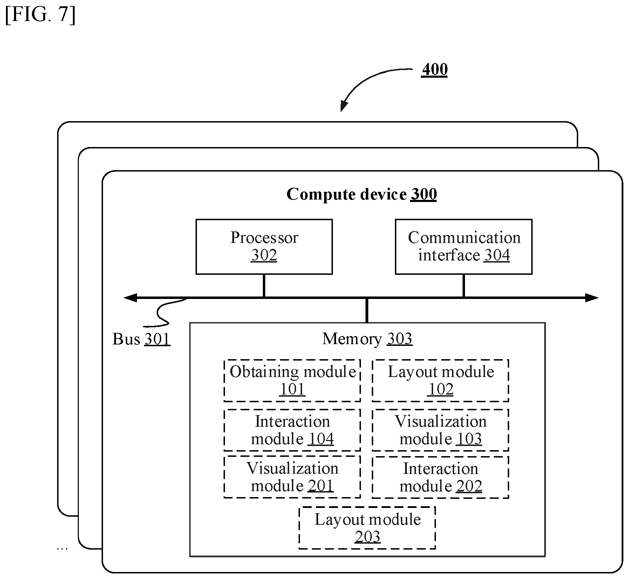

An embodiment of this application further provides a compute device cluster. The compute device cluster includes a plurality of compute devices. The plurality of compute devices in the compute device cluster may include one or more of a terminal compute device and a server in a data center in a cloud environment. As shown in FIG. 7, a compute device cluster 400 includes a plurality of compute devices 300. The plurality of compute devices 300 may be connected over a network (for example, a wide area network or a local area network).

Memories 303 in the plurality of compute devices 300 in the compute device cluster 400 may store same program code used to perform some or all of the steps in S101 to S105. Alternatively, memories 303 in the plurality of compute devices 300 in the compute device cluster 400 respectively store some program code used to perform some or all of the steps in S101 to S105, that is, a combination of the plurality of compute devices 300 jointly performs some or all of the steps in S101 to S105.

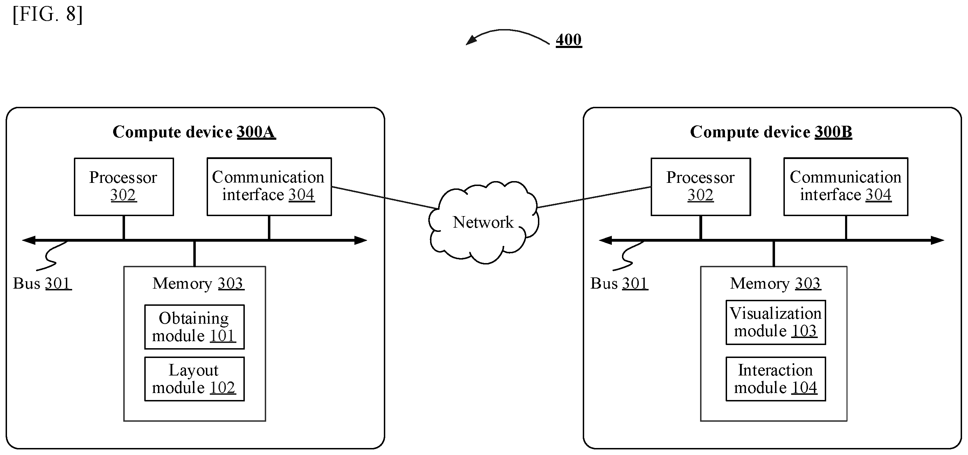

It should be understood that a specific module in the architecture diagram construction system 100 and/or the architecture diagram display system 200 is deployed on a specific compute device 300, which is not specifically limited in this embodiment of this application. In actual application, adaptive deployment may be performed based on a computing capability or a specific requirement of the compute device 300. The architecture diagram construction system 100 is used as an example. Considering how to display a central architecture diagram with a better visualization effect (for example, smooth interaction and timely page response) to a user, an embodiment of this application provides a deployment manner shown in FIG. 8. As shown in FIG. 8, a compute device cluster 400 includes a compute device 300A and a compute device 300B. The compute device 300A and the compute device 300B are connected over a network, and may be specifically connected to the network through respective communication interfaces. A memory 303 in the compute device 300A stores instructions used to implement functions of the obtaining module 101 and the layout module 102, and a memory 303 in the compute device 300B stores instructions used to implement functions of the visualization module 103 and the interaction module 104.

An embodiment of this application further provides a computer program product including instructions. The computer program product may be software or a program product that includes instructions and that can run on a compute device or can be stored in any usable medium. When the computer program product runs on at least one compute device, the at least one compute device is enabled to perform the central architecture diagram construction method described above.

An embodiment of this application further provides a computer-readable storage medium. The computer-readable storage medium may be any usable medium that can be stored by a compute device, or a data storage device, such as a data center, that includes one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, an SSD), or the like. The computer-readable storage medium includes instructions, where the instructions instruct the compute device to perform the central architecture diagram construction method described above.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can be made to the technical solutions described in the foregoing embodiments, or equivalent replacements can be made to some technical features thereof without departing from the scope of the technical solutions of embodiments of this application.

## Claims

1. A central architecture diagram construction method, wherein the method comprises:
obtaining a plurality of pieces of entity information and a relationship between the plurality of pieces of entity information;
determining first entity information, wherein the first entity information is one of the plurality of pieces of entity information;
constructing a central architecture diagram based on the first entity information and the relationship between the plurality of pieces of entity information; and
displaying the central architecture diagram, wherein a central node in the central architecture diagram indicates the first entity information, the central architecture diagram further comprises a plurality of ring layers centered on the central node, each ring layer comprises at least one node, and nodes at different ring layers have different relationships with the central node.

2. The method according to claim 1, wherein after obtaining the plurality of pieces of entity information and the relationship between the plurality of pieces of entity information, the method further comprises:
constructing and displaying a global architecture diagram based on the plurality of pieces of entity information and the relationship between the plurality of pieces of entity information, wherein each node in the global architecture diagram indicates one piece of entity information in the plurality of pieces of entity information; and
determining the first entity information comprises: receiving information generated when a user clicks a first node in the global architecture diagram, and determining, based on the information, the first entity information corresponding to the first node.

3. The method according to claim 2, wherein constructing the central architecture diagram based on the first entity information and the relationship between the plurality of pieces of entity information comprises:
determining levels of the plurality of pieces of entity information based on a hierarchical relationship between nodes in the global architecture diagram;
determining an arrangement of the nodes at the plurality of ring layers based on the levels of the plurality of pieces of entity information, wherein nodes at a same ring layer indicate entity information at a same level, and nodes at different ring layers indicate entity information at different levels; and
constructing the central architecture diagram based on the arrangement of the nodes at the plurality of ring layers.

4. The method according to any one of claims 1 to 3, wherein the central architecture diagram is an enterprise process architecture diagram, and the enterprise process architecture diagram represents a relationship between enterprise processes.

5. The method according to claim 3, wherein the method further comprises:
receiving an operation that is entered by the user to expand any node at a first ring layer in the central architecture diagram, wherein the any node indicates second entity information in the plurality of pieces of entity information, and the second entity information is associated with one or more pieces of lower-layer entity information; and
updating the central architecture diagram based on the operation of expanding the any node, and displaying an updated central architecture diagram, wherein the updated central architecture diagram hides the any node, the updated central architecture diagram comprises a second ring layer, the second ring layer comprises one or more child nodes associated with the any node, and the child node associated with the any node indicates lower-layer entity information of the second entity information.

6. The method according to claim 5, wherein receiving the operation that is entered by the user to expand the any node at the first ring layer in the central architecture diagram comprises:
receiving an operation that the user selects the any node and moves the any node to an area in which the second ring layer is located.

7. The method according to claim 3, wherein the method further comprises:
receiving an operation that is entered by the user to replace the central node; and
updating the central architecture diagram based on the operation of replacing the central node, and displaying an updated central architecture diagram, wherein the updated central architecture diagram comprises a new central node and nodes at a plurality of ring layers centered on the new central node.

8. The method according to claim 7, wherein receiving the operation that is entered by the user to replace the central node comprises:
receiving an operation that the user selects any node at a third ring layer in the central architecture diagram and moves the any node to an area in which the original central node is located; or
receiving an operation that the user selects a replaceable node and moves the replaceable node to an area in which the original central node is located, wherein the replaceable node is a node displayed in the central architecture diagram when the operation performed on the original central node is detected.

9. The method according to claim 3, wherein the method further comprises:
receiving an operation that is entered by the user to collapse a second node at a fourth ring layer in the central architecture diagram, wherein the second node indicates third entity information in the plurality of pieces of entity information; and
updating the central architecture diagram based on the operation of collapsing the second node, and displaying an updated central architecture diagram, wherein the updated central architecture diagram hides the second node and/or a third node at the fourth ring layer, the third node indicates fourth entity information in the plurality of pieces of entity information, the updated central architecture diagram further comprises a fifth ring layer, the fifth ring layer comprises a fourth node, and lower-layer entity information associated with entity information indicated by the fourth node comprises the third entity information and the fourth entity information.

10. The method according to claim 9, wherein receiving the operation that is entered by the user to collapse the second node at the fourth ring layer in the central architecture diagram comprises:
receiving an operation that the user selects the second node and moves the second node to an area in which the fifth ring layer is located.

11. The method according to any one of claims 1 to 10, wherein the central architecture diagram further comprises an edge between the central node and a node at a ring layer, and the edge indicates a relationship between entity information indicated by nodes at two ends of the edge.

12. The method according to any one of claims 1 to 11, wherein
the central architecture diagram comprises a level of entity information indicated by any node; or
a node at a ring layer connected to the central node in the central architecture diagram and a node at another ring layer are represented by different diagram elements.

13. A central architecture diagram display method, wherein the method comprises:
displaying a central architecture diagram, wherein a central node in the central architecture diagram indicates first entity information, the central architecture diagram further comprises a plurality of ring layers centered on the central node, and each ring layer comprises at least one node;
receiving an operation that a user moves a first node at a first ring layer in the central architecture diagram to an area in which a second ring layer is located, wherein the first node indicates second entity information; and
hiding the first node based on the operation performed by the user on the first node, and displaying, at the second ring layer, a second node associated with the first node, wherein the second node indicates third entity information, and the third entity information is associated with the second entity information.

14. The method according to claim 13, wherein
the second node is a child node of the first node, and the third entity information is lower-layer entity information of the second entity information; or
the second node is a parent node of the first node, and the third entity information is upper-layer entity information of the second entity information.

15. The method according to claim 13 or 14, wherein the method further comprises:
receiving an operation that the user selects a third node at a third ring layer in the central architecture diagram and moves the third node to an area in which the central node is located, wherein the third node indicates fourth entity information; and
displaying, based on the operation performed by the user on the third node, a new central node and nodes at a plurality of ring layers centered on the new central node, wherein the new central node is the third node.

16. The method according to claim 13 or 14, wherein the method further comprises:
receiving an operation performed by the user on the central node;
displaying a replaceable node based on the operation performed by the user on the central node, wherein the replaceable node indicates fifth entity information;
receiving an operation that the user selects the replaceable node and moves the replaceable node to an area in which the central node is located; and
displaying, based on the operation performed by the user on the replaceable node, a new central node and nodes at a plurality of ring layers centered on the new central node, wherein the new central node is the replaceable node.

17. The method according to any one of claims 14 to 16, wherein the central architecture diagram is an enterprise process architecture diagram, and the enterprise process architecture diagram represents a relationship between enterprise processes.

18. The method according to any one of claims 14 to 17, wherein before displaying the central architecture diagram, the method further comprises:
obtaining a global architecture diagram, wherein the global architecture diagram comprises a plurality of nodes, and each node indicates one piece of entity information;
determining, based on a hierarchical relationship between nodes in the global architecture diagram, levels of the plurality of pieces of entity information indicated by the plurality of nodes;
determining an arrangement of the nodes at the plurality of ring layers based on the levels of the plurality of pieces of entity information, wherein nodes at a same ring layer indicate entity information at a same level, and nodes at different ring layers indicate entity information at different levels; and
constructing the central architecture diagram based on the arrangement of the nodes at the plurality of ring layers.

19. An architecture diagram construction system, wherein the system comprises:
an obtaining module, configured to obtain a plurality of pieces of entity information and a relationship between the plurality of pieces of entity information;
a layout module, configured to: determine first entity information, and construct a central architecture diagram based on the first entity information and the relationship between the plurality of pieces of entity information, wherein the first entity information is one of the plurality of pieces of entity information; and
a visualization module, configured to display the central architecture diagram, wherein a central node in the central architecture diagram indicates the first entity information, the central architecture diagram further comprises a plurality of ring layers centered on the central node, each ring layer comprises at least one node, and nodes at different ring layers have different relationships with the central node.

20. The system according to claim 19, wherein
the layout module is further configured to construct a global architecture diagram based on the plurality of pieces of entity information and the relationship between the plurality of pieces of entity information, wherein each node in the global architecture diagram indicates one piece of entity information in the plurality of pieces of entity information;
the visualization module is further configured to display the global architecture diagram; and
the layout module is configured to: receive information generated when a user clicks a first node in the global architecture diagram, and determine, based on the information, the first entity information corresponding to the first node.

21. The system according to claim 20, wherein
the layout module is configured to: determine levels of the plurality of pieces of entity information based on a hierarchical relationship between nodes in the global architecture diagram; determine an arrangement of the nodes at the plurality of ring layers based on the levels of the plurality of pieces of entity information, wherein nodes at a same ring layer indicate entity information at a same level, and nodes at different ring layers indicate entity information at different levels; and construct the central architecture diagram based on the arrangement of the nodes at the plurality of ring layers.

22. The system according to any one of claims 19 to 21, wherein the central architecture diagram is an enterprise process architecture diagram, and the enterprise process architecture diagram represents a relationship between enterprise processes.

23. The system according to claim 21, wherein the system further comprises an interaction module, wherein
the interaction module is configured to receive an operation that is entered by the user to expand any node at a first ring layer in the central architecture diagram, wherein the any node indicates second entity information in the plurality of pieces of entity information, and the second entity information is associated with one or more pieces of lower-layer entity information;
the layout module is further configured to update the central architecture diagram based on the operation of expanding the any node; and
the visualization module is further configured to display an updated central architecture diagram, wherein the updated central architecture diagram hides the any node, the updated central architecture diagram comprises a second ring layer, the second ring layer comprises one or more child nodes associated with the any node, and the child node associated with the any node indicates lower-layer entity information of the second entity information.

24. The system according to claim 23, wherein
the interaction module is configured to receive an operation that the user selects the any node and moves the any node to an area in which the second ring layer in the central architecture diagram is located.

25. The system according to claim 21, wherein the system further comprises an interaction module, wherein
the interaction module is configured to receive an operation that is entered by the user to replace the central node;
the layout module is further configured to update the central architecture diagram based on the operation of replacing the central node; and
the visualization module is further configured to display an updated central architecture diagram, wherein the updated central architecture diagram comprises a new central node and nodes at a plurality of ring layers centered on the new central node.

26. The system according to claim 25, wherein
the interaction module is configured to: receive an operation that the user selects any node at a third ring layer in the central architecture diagram and moves the any node to an area in which the original central node is located; or receive an operation that the user selects a replaceable node and moves the replaceable node to an area in which the original central node is located, wherein the replaceable node is a node displayed in the central architecture diagram when the operation performed on the original central node is detected.

27. The system according to claim 21, wherein the system further comprises an interaction module, wherein
the interaction module is configured to receive an operation that is entered by the user to collapse a second node at a fourth ring layer in the central architecture diagram, wherein the second node indicates third entity information in the plurality of pieces of entity information;
the layout module is further configured to update the central architecture diagram based on the operation of collapsing the second node; and
the visualization module is further configured to display an updated central architecture diagram, wherein the updated central architecture diagram hides the second node and/or a third node at the fourth ring layer, the third node indicates fourth entity information in the plurality of pieces of entity information, the updated central architecture diagram further comprises a fifth ring layer, the fifth ring layer comprises a fourth node, and lower-layer entity information associated with entity information indicated by the fourth node comprises the third entity information and the fourth entity information.

28. The system according to claim 27, wherein
the interaction module is configured to receive an operation that the user selects the second node and moves the second node to an area in which the fifth ring layer is located.

29. The system according to any one of claims 19 to 28, wherein the central architecture diagram further comprises an edge between the central node and a node at a ring layer, and the edge indicates a relationship between entity information indicated by nodes at two ends of the edge.

30. The system according to any one of claims 19 to 29, wherein
the central architecture diagram comprises a level of entity information indicated by any node; or a node at a ring layer connected to the central node in the central architecture diagram and a node at another ring layer are represented by different diagram elements.

31. An architecture diagram display system, wherein the system comprises:
a visualization module, configured to display a central architecture diagram, wherein a central node in the central architecture diagram indicates first entity information, the central architecture diagram further comprises a plurality of ring layers centered on the central node, and each ring layer comprises at least one node; and
an interaction module, configured to receive an operation that a user moves a first node at a first ring layer in the central architecture diagram to an area in which a second ring layer is located, wherein the first node indicates second entity information, wherein
the visualization module is further configured to: hide the first node based on the operation performed by the user on the first node, and display, at the second ring layer, a second node associated with the first node, wherein the second node indicates third entity information, and the third entity information is associated with the second entity information.

32. The system according to claim 31, wherein
the second node is a child node of the first node, and the third entity information is lower-layer entity information of the second entity information; or
the second node is a parent node of the first node, and the third entity information is upper-layer entity information of the second entity information.

33. The system according to claim 31 or 32, wherein
the interaction module is further configured to receive an operation that the user selects a third node at a third ring layer in the central architecture diagram and moves the third node to an area in which the central node is located, wherein the third node indicates fourth entity information; and
the visualization module is further configured to display, based on the operation performed by the user on the third node, a new central node and nodes at a plurality of ring layers centered on the new central node, wherein the new central node is the third node.

34. The system according to claim 31 or 32, wherein
the interaction module is further configured to receive an operation performed by the user on the central node;
the visualization module is further configured to display a replaceable node based on the operation performed by the user on the central node, wherein the replaceable node indicates fifth entity information;
the interaction module is further configured to receive an operation that the user selects the replaceable node and moves the replaceable node to an area in which the central node is located; and
the visualization module is further configured to display, based on the operation performed by the user on the replaceable node, a new central node and nodes at a plurality of ring layers centered on the new central node, wherein the new central node is the replaceable node.

35. The system according to any one of claims 31 to 34, wherein the central architecture diagram is an enterprise process architecture diagram, and the enterprise process architecture diagram represents a relationship between enterprise processes.

36. The system according to any one of claims 31 to 35, wherein the system further comprises a layout module, wherein
the layout module is configured to: obtain a global architecture diagram, wherein the global architecture diagram comprises a plurality of nodes, and each node indicates one piece of entity information; determine, based on a hierarchical relationship between nodes in the global architecture diagram, levels of the plurality of pieces of entity information indicated by the plurality of nodes; determine an arrangement of the nodes at the plurality of ring layers based on the levels of the plurality of pieces of entity information, wherein nodes at a same ring layer indicate entity information at a same level, and nodes at different ring layers indicate entity information at different levels; and construct the central architecture diagram based on the arrangement of the nodes at the plurality of ring layers.

37. A compute device, comprising a processor and a memory, wherein the processor executes instructions stored in the memory, to implement the method according to any one of claims 1 to 18.

38. A computer-readable storage medium, comprising computer program instructions, wherein when the computer program instructions are executed by a compute device, the compute device is enabled to perform the method according to any one of claims 1 to 18.
